# EUROPÄISCHE PATENTSCHRIFT

(11) **EP 3 716 887 B1**
(45) Veröffentlichungstag und Bekanntmachung des Hinweises auf die Patenterteilung: **03.07.2024**
(21) Anmeldenummer: 18814838.1
(22) Anmeldetag: 30.11.2018
(51) Int. Cl.: A61C 7/28, A61C 7/14

(54) **BRACKET**
BRACKET
BAGUE ORTHODONTIQUE

(30) Priorität: 30.11.2017 DE 102017128418
(43) Veröffentlichungstag der Anmeldung: 07.10.2020
(73) Patentinhaber: Swissodont GmbH, 9435 Heerbrugg (CH)
(72) Erfinder: LENZNER, Benedikt, 31134 Hildesheim (DE)
(74) Vertreter: Eisenführ Speiser
(86) Internationale Anmeldenummer: PCT/EP2018/083178
(87) Internationale Veröffentlichungsnummer: WO 2019/106161

(56) Entgegenhaltungen:
- KR-A- 20000 037 379
- US-A- 3 464 112
- US-A1- 2003 049 582
- US-A1- 2007 166 658
- US-A1- 2012 301 838

## Beschreibung

Die Erfindung betrifft ein Bracket zur Korrektur der Zahnstellung.

Brackets sind ganz allgemein in der Kieferorthopädie schon lange bekannt und besonders hingewiesen wird auf die hiernach aufgeführten Dokumente, die verschiedene Designs und Funktionalitäten offenbaren.

Brackets (engl. Klammern) sind in der Kieferorthopädie gebräuchliche Verfestigungselemente bei festsitzenden Apparaturen. Mehrere auf verschiedenen Zähnen angeordnete Brackets, die mit einem Bogendraht verbunden sind, werden auch als Zahnspange bezeichnet. Eine solche Zahnspange ist eine zahnmedizinische Apparatur, mit der Kiefer- und Zahnfehlstellungen korrigiert werden.

Ein Bracket ist also ein Einzelelement einer Zahnspange. Brackets werden bislang durch spezielle Klebetechniken oder eine Hafttechnik aufgrund der Polymerisationsschrumpfung vom Kunststoff mit der Oberfläche des Zahns verklebt (oder haftend verbunden) und bilden so einen Ansatzpunkt zur Bewegung von Zähnen bei festsitzenden Apparaturen.

Kennzeichen für ein Bracket ist die Vorrichtung für die Aufnahme eines Bogens (auch Bogendraht genannt), in ein sogenanntes Schloss oder Slot. Hierbei handelt es sich um einen horizontal, also mesial nach distal, verlaufenden Schlitz. Dieser wird nach oben und nach unten von den Kanten der Flügel begrenzt, die zur Befestigung des Bogens mit Hilfe von z.B. Ligaturen dienen.

Das Standartbracket besitzt zwei Flügel und wird daher als Zwillingsbracket bezeichnet. Gelegentlich kommen Brackets mit einem Flügel zum Einsatz, diese werden als Singlebrackets bezeichnet.

Nach der Form des Schlosses können Brackets als Edgwise-Brackets gefertigt sein. Die Edgwise-Technik ist eine Technik, bei der die dreidimensionalen Biegungen um den Draht vorgenommen werden, bei der straight wire-Technik wurden diese beabsichtigten Zahnbewegungen im dreidimensionalen Raum sinngemäß als Programmierung (programmiertes Bracket) in die Bracketbasis mit Werten z.B. nach Ricketts, Alexander, Roth, Andrews, Bennett, Mclaughlin, Trevisi, Light-Wire-Brackets übernommen. Darüber hinaus gibt es selbstlegierende Brackets (eine im Bracket verankerte Mechanik hält im Bogen ohne Ligatur). Mithin spielt die Bracketbasis eine dominante Rolle, sie kann nämlich einmal "programmiert sein" also dreidimensional ausgerichtet sein und einmal nicht. Bei Letzterem müssen die Biegungen im Draht selbst vorgenommen werden. Bei der Edgwise-Technik läuft der Draht durch das gerade Bracket und wird vom Kieferorthopäden entsprechend der zu bewegenden Stellungkorrektur gebogen, bei der straight-wire-Technik sind diese Biegungen in der Regel nicht notwendig, da in der speziellen Form der Bracketbasis die optimalen Zahnbewegungen, wie erwähnt, vorprogrammiert sind. Es gibt auch Brackets mit einem vertikalen Slot.

Das Schloss weist einen viereckigen Abschnitt auf, der entweder die Maße (HxTZoll).018"x.025" oder .022"x.028" aufweist. In der Fachsprache spricht man von 018er oder 022er System. Beide Systeme sind auch miteinander kompatibel.

Bei der Ausführung der verschiedenen Systeme bei einem Patienten können für die bessere Torque Wirkung im Frontzahnbereich ein 0.18" Slot und im Seitenzahnbereich zum bessern "sliden" einen 0.22" Slot verwendet werden.

Darüber hinaus können Brackets danach unterschieden werden, wo sie am Zahn befestigt werden. Sind sie auf der Fläche zur Wange hin befestigt, spricht man von vestibulärer oder konventioneller Technik oder Bukkal Brackets. Befinden sie sich auf der Innenfläche zur Zunge hin, werden sie auch als Lingual Brackets bezeichnet.

Bekanntlich sind Brackets üblicherweise aus rostfreiem Edelstahl gefertigt, aber es gibt auch Brackets, die aus Gold (oder vergoldeten Materialien), Keramik, Komposit oder Titan oder dergleichen hergestellt werden.

Eine wichtige Eigenschaft, die für die Wahl des Bracket- und des Bogenmaterials von Bedeutung sein kann, ist die Friktion. Bei vielen Behandlungskonzepten soll das Bracket besser über den Bogen gleiten. Sowohl die Materialkombination aus Bracket und Bogen als auch die Art der verwendeten Ligaturen können die Friktion vergrößern oder verringern.

Die Befestigung der Brackets am Zahn erfolgt zum Beispiel mittels Kunststoff-Adhästivtechnik oder anderen verträglichem Klebeverfahren an der Oberfläche des Zahns und die Brackets bilden so einen Ansatzpunkt zu dreidimensionalen Bewegungen von Zähnen bei festsitzenden Armaturen.

Als Bogenmaterial kommt Material, zum Beispiel Metall, infrage, welches im Durchschnitt rund oder auch eckig ist oder auch einen anderen Durchmesser aufweisen kann.

Mit der Verwendung von Brackets und ihrer Bildung zu einer Zahnspange oder dergleichen, also durch die Verbindung von mehreren Brackets durch einen Bogendraht, können ganz unterschiedliche Zahnbewegungen bei einem Patienten erreicht werden. Dies sind zum Beispiel Rotationen um die Zahnachse, achsengerechtes Einstellen von Zähnen durch Torque (Verwindung), Aufrichtung gekippter Molaren - beispielsweise der 12-Jahr-Molaren (der zweiten hinteren Backenzähne) nach frühzeitigem Verlust der 6-Jahr-Molaren (der ersten hinteren Backenzähne), Lückenschluss bei Erwachsenen, Lückenöffnung bei Erwachsenen, Deckbissbehandlungen, ausgeprägte Spee-Kurve (Okklusionskurve, verlaufend durch die Kaukontakte der oberen und unteren Zähne) vertikales Wachstumsmuster (zu einem offenen Biss neigende Wachstumstendenz), Kreuzbiss bei Erwachsenen (die bukkalen, der Wange zugewandten Höcker (und) der oberen Seitenzähne beißen mittig in das Kauflächenrelief der unteren Seitenzähne anstatt seitlich an deren bukkalen Höckern vorbei), bukkale Nonokklusion/Scherenbiss bei Erwachsenen (der Unterkieferseitenzahn beißt vollständig (auf der Zungenseite/Wangenseite des Oberkieferseitenzahns vorbei), Ausformen des Ober- und Unterkieferzahnbogens usw.

US 3 464 112 A offenbart ein Bracket mit einem zwei Schlitzabschnitte aufweisenden Schlitz.

Mit der Erfindung sollen die vorgenannten körperlichen Zahnbewegungen weiterhin ermöglicht werden, weitere Bewegungen ebenfalls und vor allem soll das möglich sein, durch ein erfindungsgemäßes Bracket, welches vom Arzt, Zahnarzt, Kieferorthopäden etc. leicht zu applizieren und zu bedienen ist, ferner soll das Bracket für den Patienten sich nicht so störend anfühlen und insgesamt soll mit dem Bracket die gesamte Behandlungszeit auch (in der Praxis der Kieferorthopäden) verkürzt werden können und der Patient auch eher das Gefühl haben, dass das Bracket sicher auf den Zähnen sitzt und dort verbleibt.

Schließlich liegt der Erfindung auch die Aufgabe zugrunde, dem Patienten das Tragen eines Bracket zu erleichtern, insbesondere auch beim Tragen die Schleimhaut im Bereich der Innenlippe und Wangen und der Zunge (bei Verwendung als Lingualbracket) zu schonen und Verletzungen und damit einhergehende Entzündungen zu reduzieren oder, wenn möglich, gänzlich zu vermeiden.

Auch dient die Größe der Bracketbasis zur Verringerung von Karies.

Die Erfindung löst die Aufgabe durch ein Bracket mit dem Merkmal nach Anspruch 1.

Vorteilhafte Weiterbildung sind in den Unteransprüchen beschrieben.

Das erfindungsgemäße Bracket nach Anspruch 1 weist einen (vierten) Schlitzabschnitt auf, welcher im Wesentlichen parallel zur Bracketbasis 8 des Bracket ausgerichtet ist und welcher zwei gegenüberliegende Schlitzwände aufweist, wobei die gegenüberliegenden Schlitzwände 8 nicht parallel liegen, sondern einen spitzen Winkel einschließen, der vorzugsweise im Bereich von 2 - 8 Grad, vorzugsweise im Bereich von ca. 4 - 6 Grad liegt. Dieser Schlitz dient zur Aufnahme des Bogendrahts und seiner sukzessiven Fixierung mit Zunahme des Bogenquerschnitts bzw. Position im Schlitz.

Beim erfindungsgemäßen Bracket gibt es einen besonders geformten Schlitzkanal aus mehreren-, z.B. (bis zu) zwei oder vier oder mehr Abschnitten, wobei diese Abschnitte im Querschnitt bevorzugt einen Verlauf ähnlich eines Siphons (blitz- oder s-förmig) aufweisen und dabei weist ein Abschnitt des Schlitzkanals eine Verengung/Verjüngung auf, in der sich der Bogendraht vom Arzt eingeführt sicher verklemmt oder durchgeführt werden kann (ein Verklemmen ist auch durch die höheren Pfeilerzähne, die den Bogen in den Passsitz führen, möglich) und der Bogen sich auch nicht ohne weiteres dort lösen kann.

Um die dreidimensionale Bewegung der Zähne vom gerade durchlaufenden Bogen über die Brackets auf dem Zahn nicht mehr durch dreidimensionale Biegung erreichen zu müssen, wurde vorliegend ein neues Bracketsystem erfunden, welches es dem behandelnden Arzt deutlich einfacher macht, die auf nebeneinanderliegenden Zähnen angebrachten Brackets mittels des Bogendrahtes (Bogens) zu verbinden und dabei für einen sicheren Halt des Bogens in den Brackets zu sorgen.

Hierbei ist die dreidimensionale Ausrichtung der Zähne nach vorgegebenen Werten wie zum Beispiel Ricketts, Alexander, Roth, Andrews, Bennett, Mc Laughlin, Trevisi, möglich, ohne die Biegung direkt im Bogen vornehmen zu müssen. Gerade die Biegung des Bogens auf kleinem Durchmesser beziehungsweise in engen Abständen ist zum Teil sehr problematisch, jedenfalls bei Brackets gemäß dem Stand der Technik.

Durch die vorhandenen Flügel und Häkchen, wie sie aus dem Stand der Technik bekannt sind, kommt es vor allem bei Lingualtechnik zu nennenswerten Irritation der Weichgewebe (Zunge, Schleimhäute, Wangen, Innenseite der Lippen etc.).

Das erfindungsgemäße Bracket kann völlig auf bewegliche Bracket-Teile verzichten und hat dabei eine wie noch nachfolgend ausgeführt "schildkrötenpanzerartige Grundform".

Zur Aufnahme möglicher biomechanischer Elemente wie z.B. Stahlligaturen, Elastiks usw. dienen (auch für elastische Ketten) eine oder zwei umlaufende Rillen (Einkerbungen).

Da sich die Intrusionsbewegung von Zähnen langsamer abspielt als die Extrusionsbewegung, dienen die Molaren und die Eckzähne als sogenannte Pfeilerzähne, die die Nachbarzähne nivellieren. Bei der Angle Klasse III werden an den Pfeilerzähnen andere Positionen (mehr okklusal oder mehr apikal) für die Brackets auf der Zahnoberfläche verwendet, um eine entsprechende Nivellierung zu erreichen. Hier werden erfindungsgemäß außerdem Brackets verwendet, die einen um sich geschlossenen eckigen (oder kreisrunden) Slot aufweisen, durch den einen Bogendraht geführt wird.

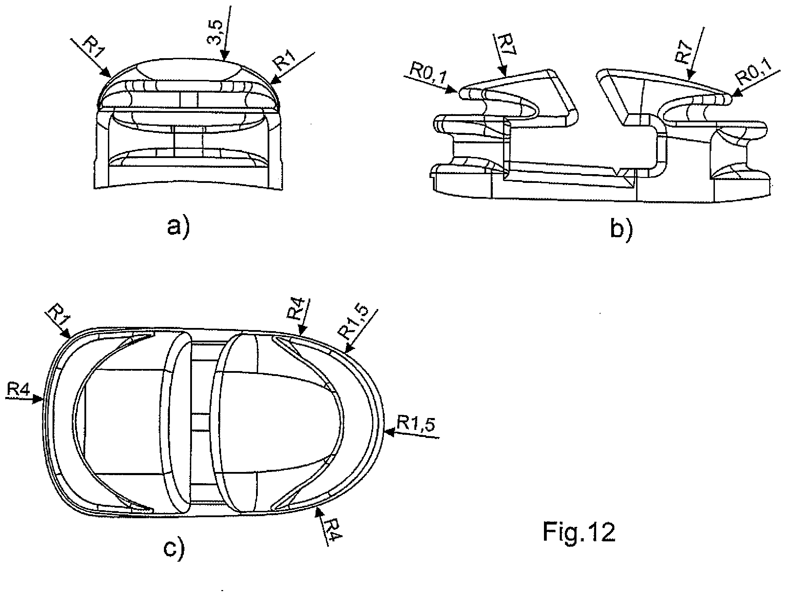

Die Brackets auf den Frontzähnen (die Frontzähne haben aus den Gründen eines niedrigeren Profils) müssen keine syphonartige Schlitzwand aufweisen - siehe Fig. 12 -) und den Prämolaren hingegen besitzen erfindungsgemäß einen syphonähnlichen verlaufenden Schlitz mit einem Passsitz für den Bogen(-draht). Ein solcher syphonähnlicher Slot ist in den Ansprüchen definiert und in den Zeichnungen dargestellt.

Um schonend mit geringen, biologisch vertretbaren Kräften die Nivellierungsphase zu beginnen, wird bei der kieferorthopädischen Behandlung zunächst ein Bogen mit geringem, kreisrunden Querschnitt eingesetzt. Der Bogenquerschnitt wird alle paar Wochen bis zum Einsetzen eines oder mehrerer Bögen mit rechteckigem Querschnitt erhöht.

Durch die Abstützung des Bogens in den geschlossenen Slots des Eckzahnes, Pfeilerzahnes und/oder der Backenzähne und die beim Essen durch Kontakt der Speise mit dem Bogen entstehenden Bewegungen des Bogens wird ein zweidimensionaler, vorzugsweise auch dreidimensionaler Druck/Zug nach innen/außen, oben/unten - je nachdem wie es gewünscht ist - ausgeübt, der den (eckigen) Bogendraht sukzessive in seinen Passsitz der erfindungsgemäßen Brackets bewegt.

Eine exakte Führung des Bogens wird zunächst weitgehend vermieden, sodass die beim Zubeißen zwischen den schrägen Höckerabhängen und den Fissuren auftretenden Kraftvektoren den Zahn in seine natürlich stehende dreidimensionale Position bewegen.

Das Material der erfindungsgemäßen Brackets kann aus einer rostfreien Metalllegierung und/oder Kunststoff und/oder Glas und/oder Keramik, Titan und/oder Verbundwerkstoffen bestehen.

Auch ist erfindungsgemäß eine Herstellung gemäß einer 3-D-Printtechnologie möglich. Durch die im Vergleich zum Standard Edgewise- bzw. Lightwire-Technik rund gestaltete erfindungsgemäße Oberfläche kann keimärmer gearbeitet werden, außerdem ist es mittels der 3-D-Printtechnologie möglich, dass gefertigten, erfindungsgemäßen Brackets auch in der Farbe gefertigt werden, die der Zahnfarbe des Patienten entspricht, was für den Patienten angenehm ist, weil dann das Tragen des Brackets nicht mehr so auffällig ist.

Die Erfindung wird mit den nachfolgenden Zeichnungen beispielhaft dargestellt.

Fig. 1a und 1b sind zeichnerische Darstellungen des Brackets vornehmliche für Eck- und Backenzähne, also Pfeilerzähne.

Fig. 2a und 2b sind zeichnerische Darstellungen des erfindungsgemäßen Brackets vornehmlich für die Schneidezähne und Prämolaren.

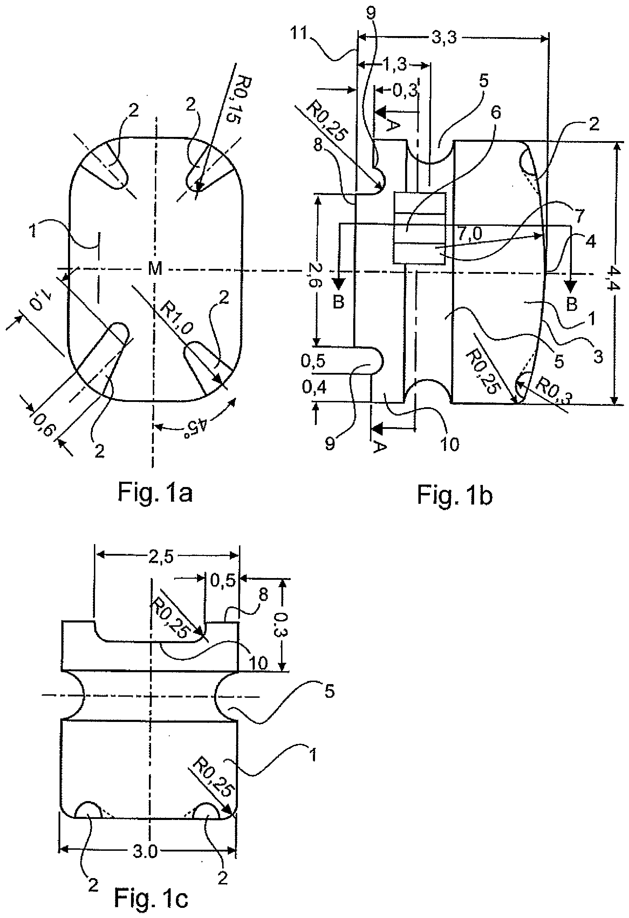

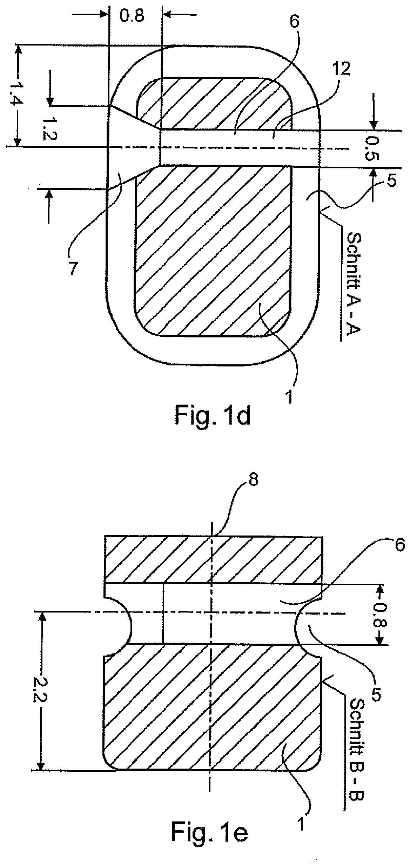

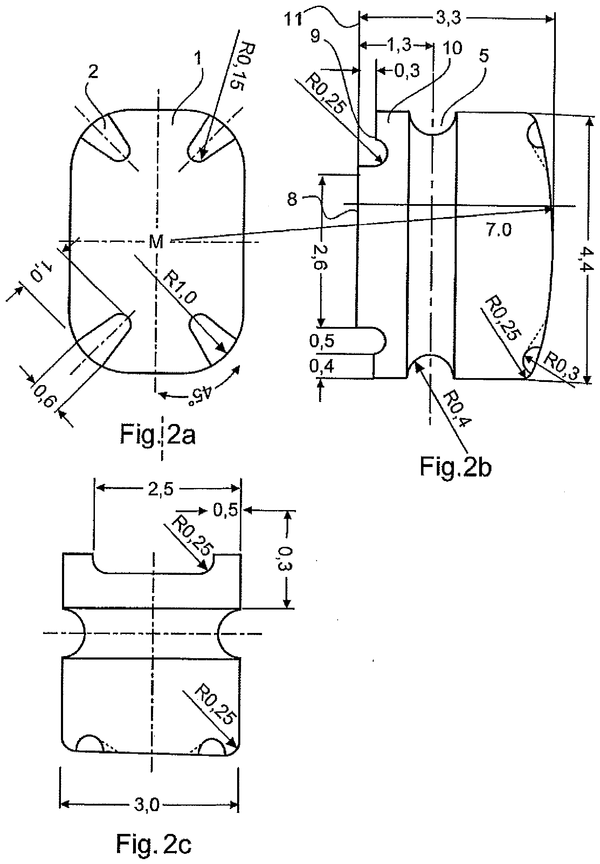

Für die in den Fig. 1 und 2 dargestellten Brackets ist es möglich, einen Bogendraht mit kreisrundem oder rechteckigem/quadratischem Querschnitt einzusetzen.

Der Vorteil der erfindungsgemäßen Brackets liegt nicht nur in der zeitlich schnelleren als bisher Befestigung des Drahtes (Bogens und des oben beschriebenen Bogenwechsels) zur Ausformung von Zahnbögen und ermöglicht im Idealfall nicht nur eine schnellere Positionsänderung der Zähne. Darüber hinaus ermöglicht die Erfindung, dass die Kraft zur Zahnbewegung neben der Elastizität des Bogenmaterials auch durch die Verankerung an bestimmten Pfeilerzähnen erfolgt. Schließlich kann bei den erfindungsgemäßen Brackets auf bewegliche Bracketteile gänzlich verzichtet werden, was zu einer strukturellen Vereinfachung des Bracketkörpers führt und auch Abbrechen bzw. Versagen von beweglichen Teilen vermeidet.

Die außen umlaufende Nut (oder Nuten) des erfindungsgemäßen Brackets ermöglicht einerseits, dass ein Bogen dort um das Bracket herumgeführt wird - zurVertikalentwicklung eines oder mehrerer benachbarter Zähne - und dann mit den benachbarten Brackets mittels des Bogens verbunden werden und es andererseits auch die Verankerung des Brackets z. B. mittels elastischen Ketten oder Stahlligaturen, etc.

Fig. 1 zeigt 5 verschiedene Darstellungen bzw. Ansichten oder Querschnitte eines erfindungsgemäßen Brackets, welcher insbesondere auch für einen Pfeilerzahn geeignet ist. Der Pfeilerzahn ist bei der orthopädischen Anwendung dabei häufig ein Eckzahn und/oder ein Backenzahn.

Fig. 1a zeigt die Aufsicht, Fig. 1b eine Seitenansicht aus einer ersten Perspektive, Fig. 1c eine weitere Ansicht aus einer gegenüber Fig. 1b um 90 Grad versetzten Seitenperspektive, Fig. 1d ein Sperrschnitt und Fig. 1e einen weiteren Querschnitt des Bracket.

In Fig. 1a ist zu erkennen, dass der Grundkorpus des Bracket in etwa rechteckig (oder oval) ausgebildet ist, wobei die Kanten stark abgerundet sind, so dass in der Aufsicht eine Kontur abgebildet ist, nachfolgend auch als schildkrötenpanzerartig bezeichnet ist.

Das Bracket 1 weist dabei an seinen vier "runden Ecken" zur Mitte M des Brackets ausgerichtete Einkerbungen 2 auf. Diese Einkerbungen sind nicht zwingend notwendig, wenn aber vorhanden sind diese besonders geeignet zum Einhängen von Gummiketten, intermaxillären Gummizügen usw..

In Fig. 1b ist eine Seitenansicht des in Fig. 1a dargestellten Brackets dargestellt.

Dabei ist insbesondere in Fig. 1b gut zu erkennen, dass die Bracketoberseite 3 leicht gewölbt ist und die Einkerbungen 2 unterhalb des Zenits 4 der Wölbung 3 angeordnet sind.

In Fig. 1b ist ferner eine dem Bracket umlaufende Einschnürung 5 zu erkennen. Diese Einschnürung kann dazu verwendet werden, im Bedarfsfall auch einen Bogendraht um den Bracket zu führen und somit eine bestimmte Kraft auf die Seitenzähne auszuüben, die ebenfalls mit einem Bracket versehen sind, wobei dieses Bracket der Seitenzähne entweder das in Fig. 1, oder das in Fig. 2 dargestellte, oder ein anderes Bracket sein kann.

Richtig ist in Fig. 1b zu erkennen, dass das Bracket einen Durchbruch 6 aufweist, welcher im dargestellten Beispiel eine rechteckige Öffnung aufweist. Diese Öffnung kann selbstverständlich auch einen anderen Querschnitt aufweisen, ebenso kann der in Fig. 1b dargestellte rechteckige Querschnitt des Durchbruchs ebenfalls ein anderes Profil aufweisen, z. B. oval, oder rund, oder quadratisch etc..

In Fig. 1b ist zu erkennen, dass die Öffnung 7 des Durchbruchs 6 größer ausgebildet ist als der Durchmesser und das Profil des Durchbruchs 6. Dies ist in Fig. 1d besser gezeigt und wird dort auch beschrieben. Diese trichterförmige Öffnung dient dem einfachen Einfädelndes Bogendrahtes.

Die Bracketoberseite bzw. Wölbung 3 liegt gegenüber des Bracketbodens 8.

Im dargestellten Beispiel ist sehr gut zu erkennen, dass der Bracketboden 8 eine deutlich kleinere Fläche aufweist als die Bracketoberseite.

So ist beispielsweise in Fig. 1b die Bracketoberseite 4,4 mm lang, während der Bracketboden nur2,6 mm lang ist.

Seitlich am Brackelboden sind parallel zum Durchbruch 6 angeordnete Nuten bzw. Kerben 9 ausgebildet, die vom Bracketboden weg in das Bracketinnere gerichtet sind. Diese Nuten 9 sind insbesondere geeignet zur Aufnahme von Stahlligaturen, Gummiringen oder dergleichen. Gleichzeitig sind die Nuten 9 nicht unbedingt notwendig, allerdings dann vorteilhaft, wenn über eine Stahlligatur oder elastische Kette oder Gummiring oder dergleichen auch eine Kraft auf den Zahn ausgeübt werden soll.

Ferner ist gut zu erkennen, dass der äußere Bracketrand 10 nicht bis zur Ebene 11 des Bracketbodens 8 reicht.

Somit ist es dem behandelten Arzt, Kieferorthopäden oder dergleichen möglich, auch an diesem Teil eines Brackets ein Bogendraht zu verlegen, falls dies erforderlich ist.

Die in Fig. 1b dargestellten Kerben/Nuten 9 sind für das erfindungsgemäße nach Fig. 1 dargestellte Bracket nicht unbedingt zwingend nötig, falls aber vorhanden, erleichtern sie es dem behandelnden Arzt, Kieferorthopäden oder dergleichen mit einem gleichen quasi Universalbracket auch eine Verlegung des Bogendrahtes vorzunehmen, die ohne die Kerben/Nuten 9 nicht möglich wäre, z.B. um den Zahn anzuheben.

Fig. 1c zeigt eine um 90 Grad versetzte Außenansicht des in Fig. 1b dargestellten Brackets.

Dabei ist gut zu erkennen, dass die Einschnürung 5 das gesamte Bracket umläuft und es sind auch die Einkerbungen 2 an der Oberseite des Brackets zu erkennen.

In Fig. 1c ist auch zu erkennen, dass der Bracketrand 10 nicht bis zur Ebene des Bracketbodens heruntergezogen ist.

Fig. 1d zeigt einen Querschnitt durch das Bracket gemäß Fig. 1b gemäß der Schnittlinie A-A.

Dabei ist der Bracketkern (schraffierte Fläche) des Brackets 1 gut zu erkennen und ebenfalls der nicht zentrisch angeordnete Durchbruch 6 mit seiner Öffnung 7.

Selbstverständlich kann der Durchbruch 6 mit seiner Öffnung 7 auch zentrisch angeordnet sein und des Weiteren eine andere Lage innerhalb des Brackets aufweisen wie in Fig. 1d dargestellt.

In Fig. 1 ist die umlaufende Einschnürung 5 zu erkennen, welche bevorzugt zur Aufnahme von Gummis, Ketten, Elastiks, Stahlligaturen, unter Umständen auch des Bogenmaterials dient.

Der Durchbruch 6 ist so groß gehalten, dass durch ihn ein entsprechender Bogendraht (Bogen) geführt/eingefädelt werden kann.

Es ist dabei nicht zwingend notwendig, dass die Öffnung 7 sich nach außen über den Bogen des Durchbruchs 4 ausweitet, aber wenn dies der Fall ist, erleichtert dies einerseits unter Umständen das Einfädeln des Bogendrahtes zur Durchführung durch das Bracket und andererseits erlaubt es auch, dass das Bogenmaterial nicht nur in einer einzigen quasi linearen Verlängerung des Kanals 12 des Durchbruchs 6 geführt zu werden, sondern kann diesen auch in einem anderen Winkel verlassen, wenn vom behandelnden Arzt gewünscht wird.

Selbstverständlich ist es auch möglich, dass die aufgeweitete Öffnung 7 auch auf der gegenüberliegenden Seite des Durchbruchs 6 des Brackets 1 angeordnet ist und somit das Bracket bedarfsweise auch zwei aufgeweitete Öffnungen aufweisen kann.

Fig. 1e zeigt einen Querschnitt durch das erfindungsgemäße Bracket und die Darstellung nach Fig. 1b gemäß der Schnittlinie B-B.

In den weiteren Figuren 1a*, 1b*, 1c*, 1d*, 1e* sind die in den Figuren 1a - 1e gezeigten Darstellungen nochmals gezeigt, allerdings mit einer vollständigen Bemaßung.

Fig. 2 zeigt eine weitere Variante des erfindungsgemäßen Brackets mit bestimmten Änderungen gegenüber des in Fig. 1 dargestellten Brackets.

Dabei zeigt wiederum Fig. 2a eine Aufsicht auf das Bracket, wie sie bereits aus Fig. 1a bekannt ist.

Fig. 2b zeigt den bereits ebenfalls in Fig. 1a beschriebenen Bracketkörper, allerdings ohne den Durchbruch 6 mit der Öffnung 7, Fig. 2c zeigt ähnlich wie Fig. 1c eine in 90 Grad gesetzte Seitenansicht zur Fig. 2b.

In der Darstellung gemäß Fig. 2 ist wiederum die umlaufende Einschnürung 5 zu erkennen. Der Bracketboden 8 sowie die im Bracketboden senkrecht gerichtete Einkerbung 9.

Das in Fig. 2 gezeigte Bracket ist geeignet über die Kerben 2, die Einschnürung 5 oder die Kerbennute 9 entsprechend einen Bogendraht für die Behandlungszwecke in gewünschter Weise aufzunehmen.

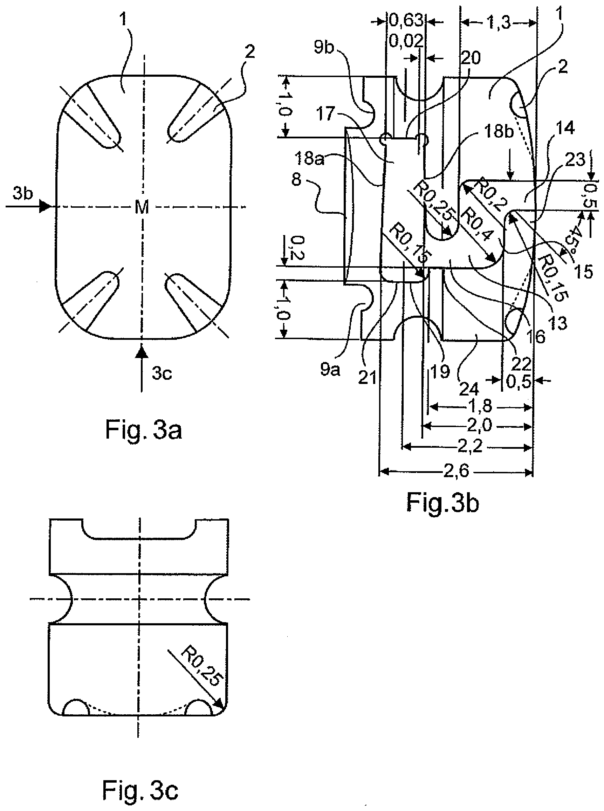

Fig. 3 zeigt eine erste Ausführungsform des in Anspruch 1 beschriebenen erfindungsgemäßen Brackets. Fig. 3a zeigt wiederum die schon aus Fig. 1a bzw. 1b bekannte Aufsicht auf das erfindungsgemäße Bracket mit den an den "runden Ecken" ausgebildeten Kerben 2, die in Richtung der Bracketmitte ausgerichtet sind.

Fig. 3b zeigt die Seitenansicht des in Fig. 3a dargestellten Bracket, Fig. 3c eine dann um 90 Grad versetzte Seitenansicht.

In Fig. 3b ist zu erkennen, dass das erfindungsgemäße Bracket einen von mesial nach distal verlaufenden Schlitz 13 zur Aufnahme eines Bogendrahtes (nicht dargestellt) aufweist.

In der Fig. 3b ist gut zu erkennen, dass der Schlitz 13 mehrere Abschnitte aufweist, nämlich einen ersten Abschnitt 14 über den der Bogendraht in den Schlitz 13 eingeführt wird.

An dem ersten Schlitzabschnitt 14 schließt sich ein zweiter Schlitzabschnitt 15 an, welcher im Wesentlichen senkrecht zum ersten Schlitzabschnitt 14 verläuft.

An dem zweiten Schlitzabschnitt 15 schließt sich ein dritter Schlitzabschnitt 16 an, der in Richtung des Bracketbodens 8 und somit im Wesentlichen senkrecht zum zweiten Schlitzabschnitt 15 und somit auch im Wesentlichen parallel im ersten Schlitzabschnitt 14 ausgerichtet ist.

Schließlich ist ein vierter Schlitzabschnitt 17 ausgebildet, welcher im Wesentlichen parallel zum zweiten Schlitzabschnitt 15 verläuft und somit auch im Wesentlichen senkrecht zum dritten Schlitzabschnitt 16 ausgerichtet ist.

Ein in das Bracket eingeführter Bogendraht gelangt mithin über den ersten Schlitzabschnitt 14 zum Schlitzabschnitt 15, dann zum Schlitzabschnitt 16 und dann schließlich in den Schlitzabschnitt 17 und wird dort zwischen den gegenüberliegenden Wänden 18a, 18b des Schlitzabschnitt 17 eingeklemmt.

Wie in der Darstellung gut zu erkennen, sind die gegenüberliegenden Wände 18a und 18b des Schlitzabschnitts 17 nicht parallel zueinander angeordnet, sondern mit einem leicht zulaufenden Winkel α versehen, so dass sich der Wandabstand zwischen 18a und 18b des Schlitzabschnitts 17 und seiner unteren Basis 19 bis zu seinem Ende 20 (kontinuierlich) verringert. In dem dargestellten Beispiel beträgt α ca. 4 - 5°, ein Winkel im Bereich von ca. 2° - 8° ist vorteilhaft.

Dabei sind die Breiten (Wandabstände) der Schlitzabschnitte 14, 15 und 16 stets wenigstens so groß wie das mittlere Maß des Schlitzabschnitts 17.

Wo im Schlitzabschnitt 17 der Bogendraht verklemmt wird, hängt maßgeblich von seinem Durchmesser, seinem Material und seinem Querschnittsprofil ab.

Je größer der Durchmesser, umso eher kann der Bogendraht nicht bis zum Ende 20 des vierten Schlitzabschnitts 17 eingeführt und verklemmt werden.

Dadurch, dass die gegenüberliegenden Wände 18a, 18b des vierten Schlitzabschnitts 17 sich nur über die Länge geringfügig immer weiter bis zum Ende 20 des letzten Abschnitts dichter kommen, kann außerordentlich präzise und zuverlässig ein Bogendraht im vierten Schlitzabschnitt 17verklemmtwerden.

Sollte sich bei einem Patienten, bei dem das in Fig. 3 dargestellte Bracket an den Zähnen zu kieferorthopädischen Maßnahmen angebracht ist beim Essen eine Kraft längs des Schlitzkanals 17 in Richtung Schlitzabschnittende 19 auf den Bogen auswirken, z. B. durch Essensreste, Knochen usw. und sollte dabei der Bogendraht in Richtung des Bodens 19 des vierten Schlitzabschnitts bewegt werden, also aus seiner Verklemmung gelöst werden, so kann dennoch nicht unmittelbar der Bogen im Draht zurück in den Schlitzabschnitt 16 gelangen, solange der Bogendraht am Boden 19 des Schlitzkanals 17 liegt, weil dieser Boden wie in Fig. 3b dargestellt, eine Bodenebene 21 aufweist, die unterhalb der Wandungsebene 22 des dritten Schlitzabschnitts 16 liegt. Wie in Fig. 3b gut zu erkennen, muss aber der Bogen, um in das Bracket eingeführt zu werden, oder herausgeführt zu werden, entlang aller vier Schlitzabschnitte geführt werden und wie in Fig. 3b gut zu erkennen, ist der gesamte Schlitzverlauf ähnlich angeordnet wie bei einem Siphon. Damit wird ein unerwünschtes Ablösen des Bogens aus dem Bracket verhindert.

Erste - nicht öffentliche Versuche - haben gezeigt dass mit den in Fig. 3b dargestellten Bracket eine außerordentlich zuverlässige Befestigung des Bogendrahts am Bracket möglich ist, vor allem die Einführung des Bogendrahtes deutlich schneller möglich ist, als wie bei den bisher bekannten Brackets.

Wie in Fig. 3b ebenfalls zu erkennen, ist die Öffnung des ersten Schlitzabschnitts 14 in Richtung der nach außen stehenden Wölbung leicht geöffnet 23.

Das dient einerseits dazu, dass die Einführung des Brackets leichter erfolgen kann, andererseits aber auch dazu, dass sich anders als bei bisher bekannten Brackets aus dem Stand der Technik keine weniger scharfen Kanten am Bracket bilden, die die Weichteile insbesondere an der Innenlippe irritieren können.

Die aufgeweitete Öffnung 23 des ersten Schlitzabschnitts 14 ist nicht zwingend notwendig, aber besonders vorteilhaft, wenn Irritationen der Haut bzw. der Weichteile (Innenlippe) vermieden werden sollen.

Fig. 3c zeigt eine um 90 Grad zu Fig. 3b dargestellte Außenansicht.

Fig. 3 zeigt ein Bracket zur Korrektur der Zahnstellung mit einer an einem Zahn befestigbaren Bracketbasis 8 und einem Bracketkörper 24, der einen von mesial nach distal verlaufenden Schlitz 16 aufweist, welcher einen ersten Schlitzabschnitt 14 zur Einführung des Bogendrahts in das Bracket aufweist, wobei sich an dem ersten Schlitzabschnitt 14 ein im Wesentlichen senkrecht dazu verlaufender zweiter Schlitzabschnitt 15 anschließt, der sich in Richtung der Bracketbasis 8 ein dritter Schlitzabschnitt 16 anschließt, wobei der zweite Schlitzabschnitt 15 im Wesentlichen senkrecht verläuft zum ersten Schlitzabschnitt 14 und zum dritten Schlitzabschnitt 16 und dass an dem dritten Schlitzabschnitt 16 ein vierter Schlitzabschnitt 17 anschließt, welcher im Wesentlichen parallel zum zweiten Schlitzabschnitt 15 verläuft.

Wie dargestellt und beschrieben, ist der vierte Schlitzabschnitt 17 dabei länger als der zweite Schlitzabschnitt 15.

Besonders vorteilhaft ist es, wenn der vierte Schlitzabschnitt 17 sich an einem bestimmten Bereich seines Abschnitts verengt und an seiner engsten Stelle eine Schlitzbreite aufweist, die bevorzugt geringer ist als die des Durchmessers des Bogendrahts.

Besonders vorteilhaft ist es auch, wenn der erste Schlitzabschnitt 14 eine aufweitende Öffnung 23 aufweist, um die Einführung des Bogendrahts zu erleichtern und um Irritationen an den Weichteilen zu verringern.

Die Bracketbasis 8 ist bevorzugt gemescht (waffelartig) ausgebildet und durch die Ausbildung des besonders ausgeformten gekrempelten Randes (dies kann auch ein abgeschrägter Rand mit circa 15° Grad und einer Schnittkante sein) und dem bei den "Auslässen", also den Nuten 9, kann leicht zur Verklebung des Brackets am Zahn austretender überflüssiger Kunststoff oben oder unten im Bereich der Kanten abgeführt werden.

Als Bogenmaterial kommt bislang bekanntes Bogenmaterial in Betracht, vorzugsweise in der Größenordnung von 0,12 Inch bis 0,25 Inch.

Die verwendeten Bogenmaterialien sind bevorzugt rund, können aber auch im Querschnitt rechteckig, oval, trapezförmig oder quadratisch ausgebildet sein.

Mit dem erfindungsgemäßen Bracket wird eine ganz bedeutende Friktionsreduzierung erreicht.

Zur Friktionsreduzierung trägt dabei der konisch zulaufende Slot des Schlitzkanals 17 ebenso bei wie die Oberfläche des Bogenmaterials, wobei auch dieser bevorzugt eine Vielzahl von kleinen "Mikrohalbkugeln" ausgebildet sind, wodurch nur noch eine punktförmige Auflagefläche erzielt wird, mittels derdie Friktionsreduzierung erreicht wird.

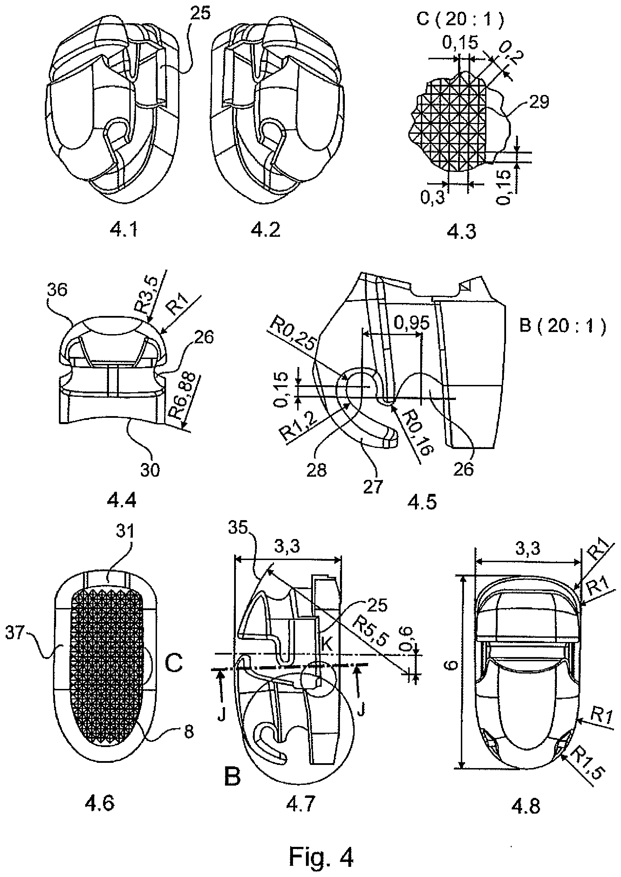

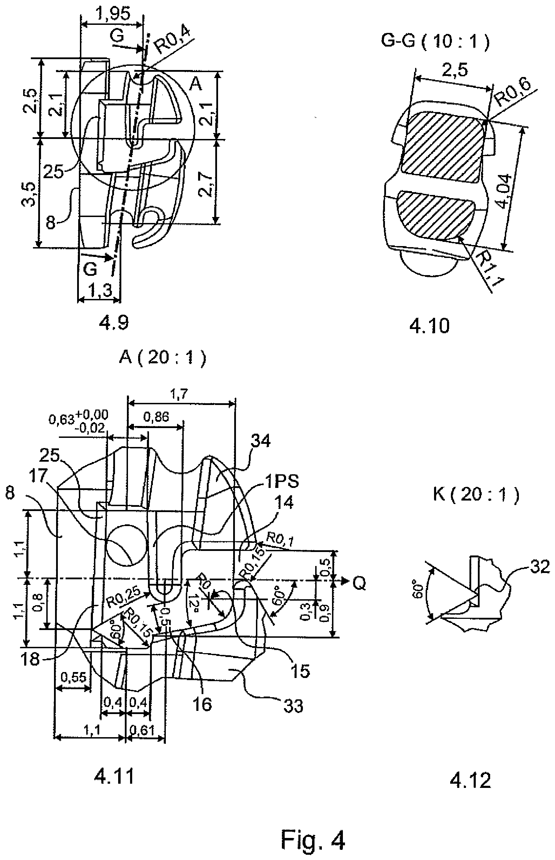

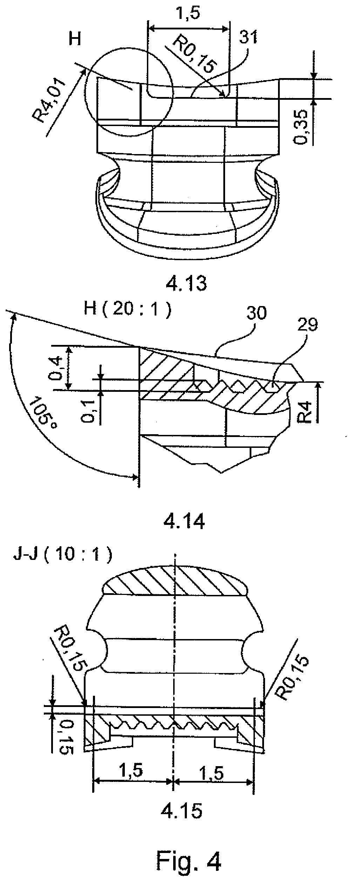

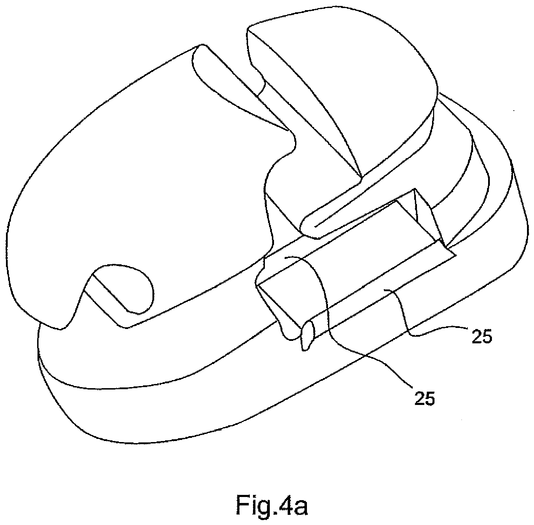

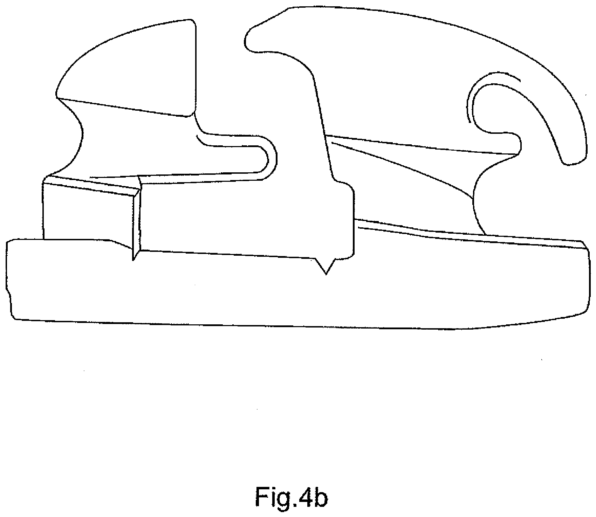

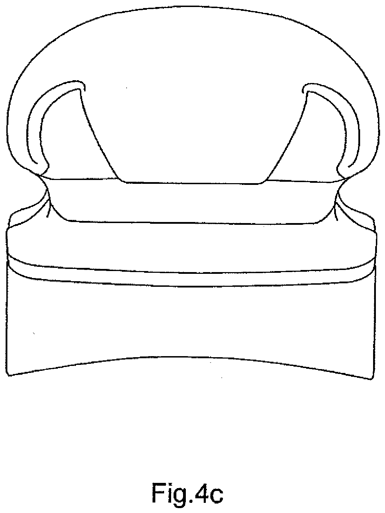

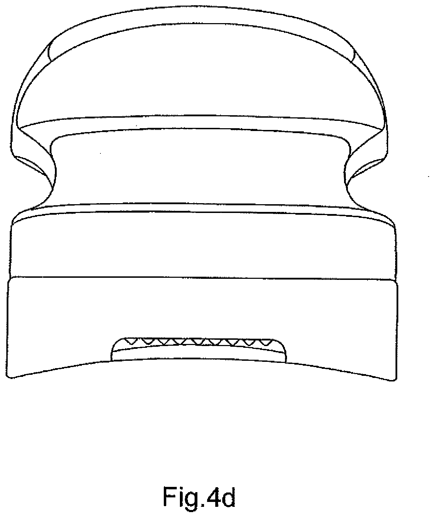

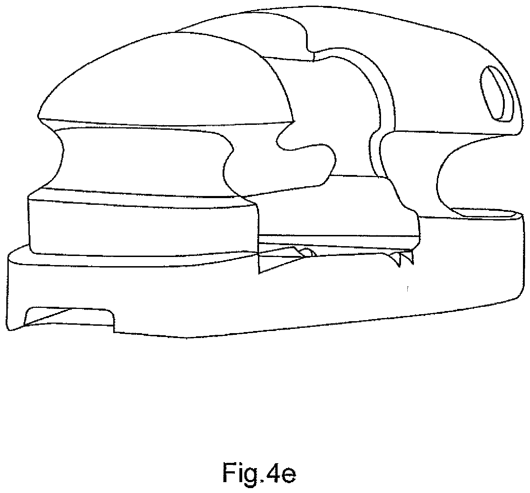

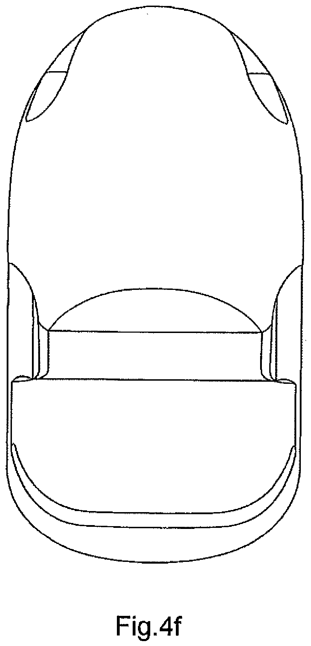

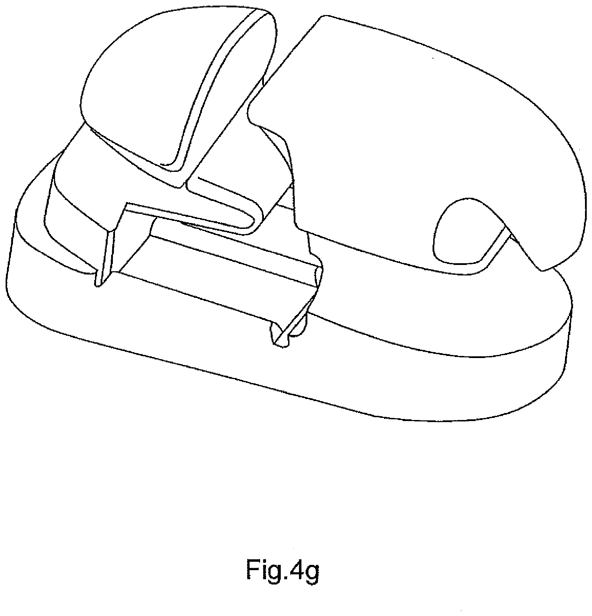

Bei Anlage des Bogenmaterials im konisch zulaufenden Schlitz (Slot) liegt das Bogenmaterial nicht unmittelbar an der Wandung des Schlitzkanals an, sondern auf eine Mehrzahl von in "Mikrohalbkugeln", z. B. an drei bis zehn der durch die "Mikrohalbkugeln" gebildeten Erhebungen. Statt der Mikrohalbkugeln können auch in den vierten Schlitzkanal in dessen Längsrichtung verlaufende, nebeneinander liegende stegartige Erhebungen 25 ausgebildet sein (dies wird in Figur4 erläutert), die wie die Mikrohalbkugeln dafür sorgen, dass der Bogendraht nicht an dem Schlitzkanal ganzflächig an der Schlitzkanalwandung anliegt, sondern nur dort, wo sich die Mikrohalbkugeln bzw. stegartige Erhebung ausbildet. Der Vorteil dieser Ausbildung der Mikrohalbkugeln bzw. der stegartigen Erhebungen 25, 38 besteht darin, dass durch die wenigen Auflagepunkte eine bessere Friktionsreduzierung erreichbar ist.

Insgesamt sind der im Schlitzkanal 17 mehr als zehn erhabene Auflagepunkte, die bevorzugt halbkugelförmig bzw. mehrere, z.B. Stege 25 ausgebildet.

Diese erhabenen Auflagepunkte bzw. Stege 25, die beispielsweise einstückig mit dem Bracket hergestellt werden, haben neben der erwähnten Friktionsreduzierung auch den Vorteil, dass sich das Bogenmaterial zwischen den halbkugelförmigen Erhebungen besser positionieren kann (unter Umständen auch verklemmen), um somit der Sitz des Bogenmaterials im vierten Schlitzabschnitt 17, welcher nach oben hin führt, verbessert werden kann.

Die im vierten Schlitzabschnitt 17 ausgebildeten erhabenen Auflagepunkte haben an der Basis einen Durchmesser von beispielsweise bis zu 100 µm, sind im Wesentlichen an der Basis kreisrund ausgebildet und haben eine Höhe von 25 µm.

Fig. 4 zeigt 15 Darstellungen einer weiteren Ausführung eines erfindungsgemäßen Brackets.

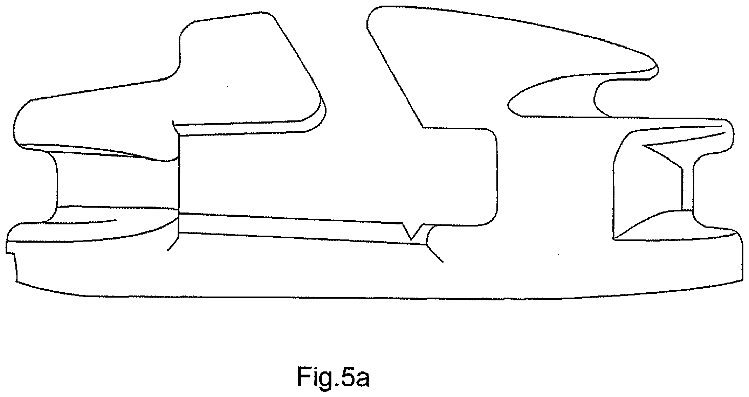

Fig. 4 und 5a bis 5g zeigen entsprechend bildliche Darstellungen des in Fig. 4 dargestellten Brackets mit weiteren Einzelheiten.

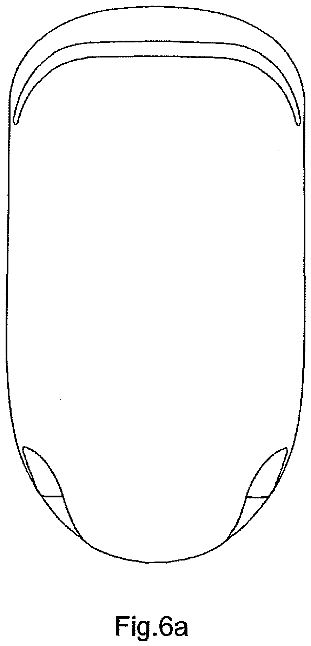

Fig. 6a bis 6f zeigen ein Bracket für einen Pfeilerzahn bzw. Eckzahn.

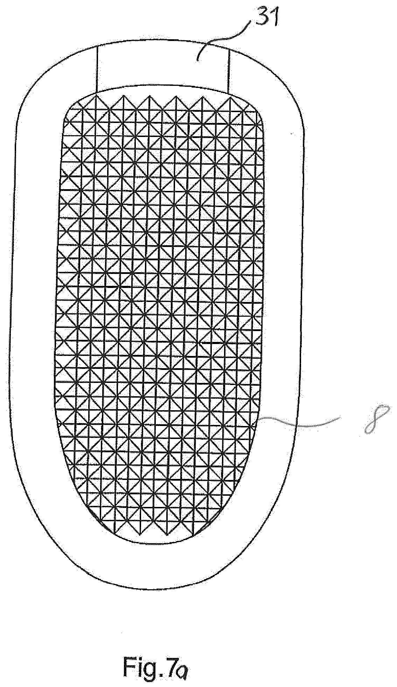

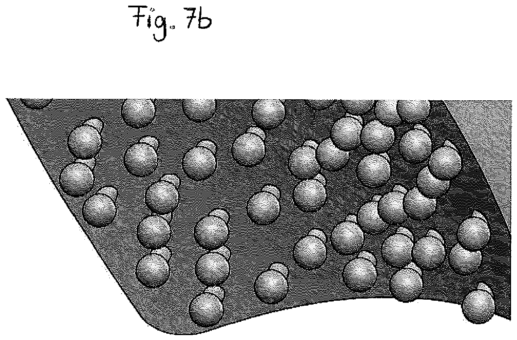

Fig. 7 zeigt die Unterseite der in Fig. 4 bis 6 dargestellten Brackets.

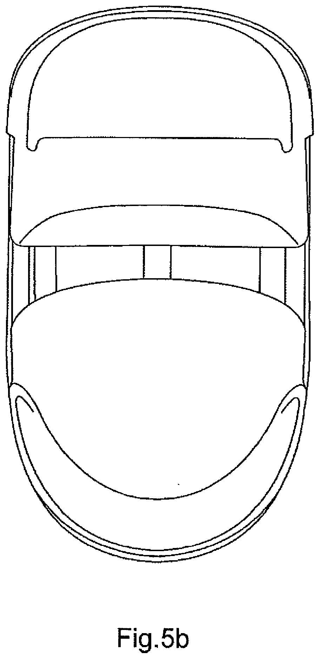

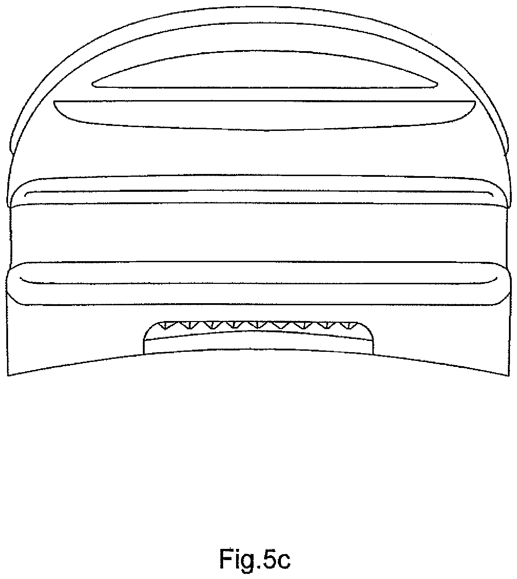

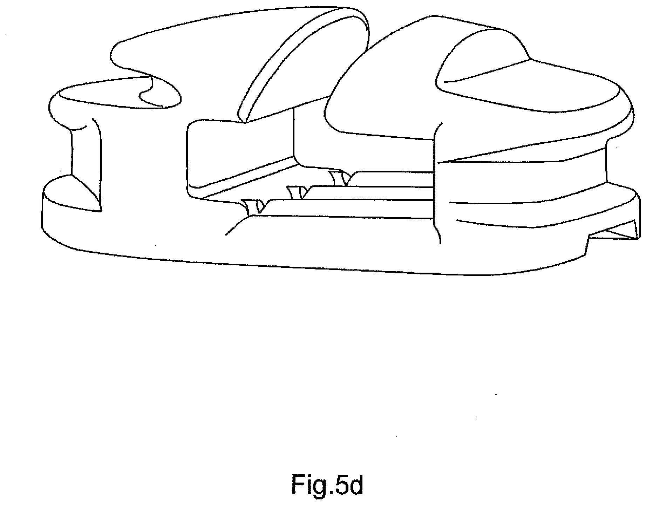

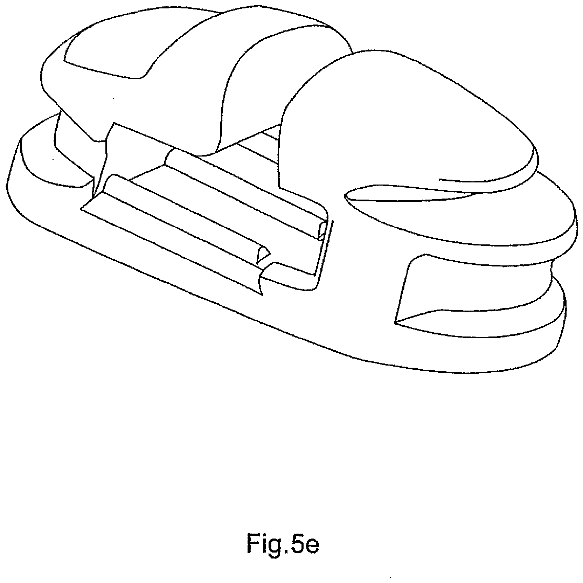

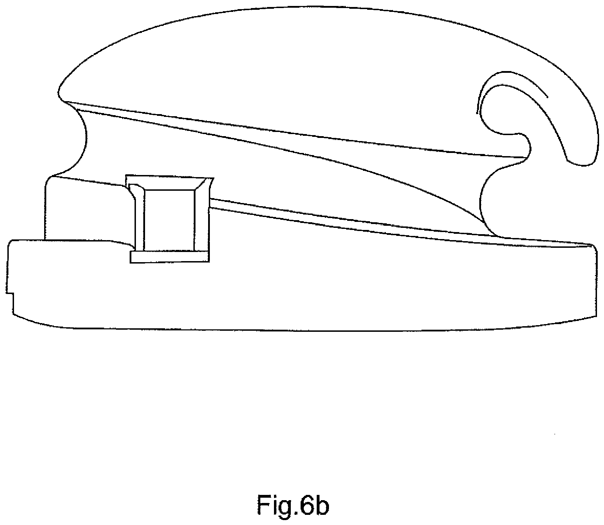

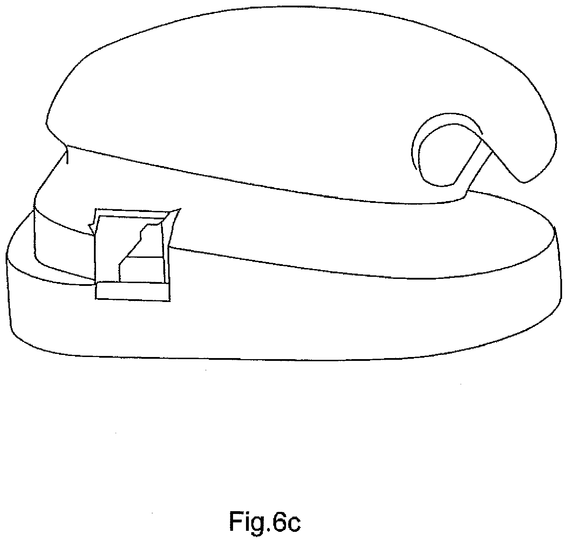

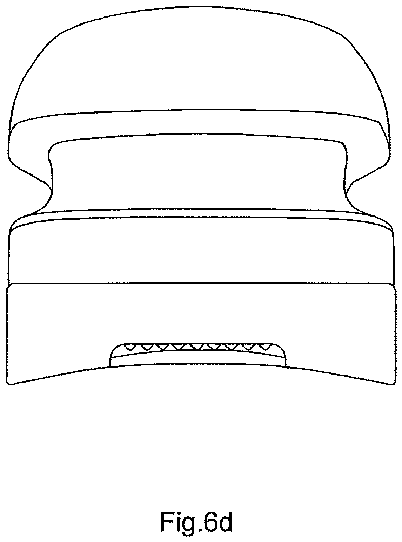

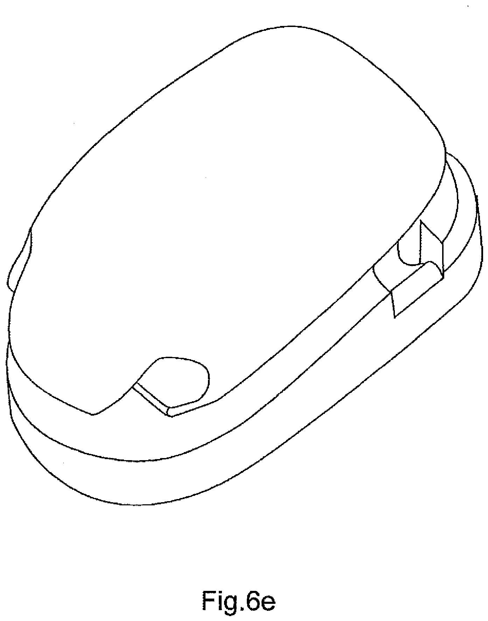

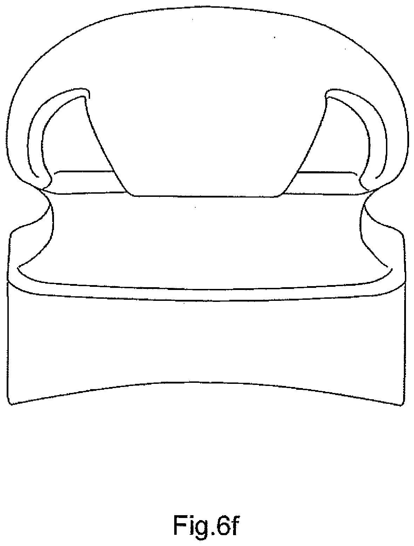

Ganz allgemein ist zunächst einmal festzustellen, dass das erfindungsgemäße Bracket gemäß der Fig. 4 und 5, wie auch das Bracket gemäß Fig. 6 von der Oberfläche her eine Art Schildkrötenpanzerstruktur aufweist, d.h. eine Oberfläche aufweist, die bei der Aufsicht im Wesentlichen oval ausgeführt ist und die zu den Kanten hin, zu allen Seiten hin, sich abflacht, um somit sich für den Patienten möglich geschmeidig im Mund, insbesondere an den Lippeninnenseiten anfühlt.

In den Fig. 4.1 und 4.2 sind verschiedene Perspektiven des erfindungsgemäßen Brackets zu sehen.

Zum technischen Verständnis dieser Figuren sei auf alle nachfolgenden Figuren hingewiesen, die in verschiedene Ansichten ein und das gleiche Ausführungsbeispiel offenbaren in den verschiedensten Ansichten, Schnittdarstellungen und Perspektiven. Diese Ansichten sind für den Fachmann auch zum großen Teil selbsterklärend.

Soweit in den Figuren auch eine Bemaßung aufgeführt wird, ist diese nur beispielhaft zu verstehen und keineswegs einschränkend.

Fig. 4.11 zeigt in der Querschnittsdarstellung das erfindungsgemäße Bracket mit dem ersten Schlitzabschnitt 14, dem zweiten Schlitzabschnitt 15, dem dritten Schlitzabschnitt 16 und dem vierten Schlitzabschnitt 17.

Fig. 4.11 selbst ist eine vergrößerte Darstellung des Ausrisses a gemäß Fig. 4.9 welcher den gesamten Bracketaufbau aus der Seitenansicht zeigt.

In den Fig. 4.1, 4.2, 4.7, 4.9 wie auch 4.11 ist darüber hinaus zu erkennen, dass im vierten Schlitzabschnitt in Längsrichtung I an der in dem Bracketboden 8 zugewandten Seite der Schlitzwand 18a ein oder mehrere Stege 25 ausgebildet sind. Die Funktion dieser Stege besteht darin, dass dann, wenn das Bogenmaterial im vierten Schlitzabschnitt zur Anlage kommt, der Bogen einerseits ganzflächig gegen die Schlitzwand 18b gedrückt wird, andererseits nicht ganzflächig an der Schlitzwand 18a liegt, sondern dort nur auf den Stegen 25, was zur Folge hat, dass die Friktion verringert wird (das die Anpresskraft, mit der der Bogen auf den Stegen liegt, deutlich größer ist als wenn das Bogenmaterial an einer ebenen Schlitzwand anliegen würde). Durch die hohe Andrücckraft wird verhindert, dass sich der Bogen aus dem vierten Schlitzabschnitt durch Kaubewegungen, Essenreste oder anderer Kräfte, die beim Patienten auf den Bogen ausgeübt werden, herausbewegt.

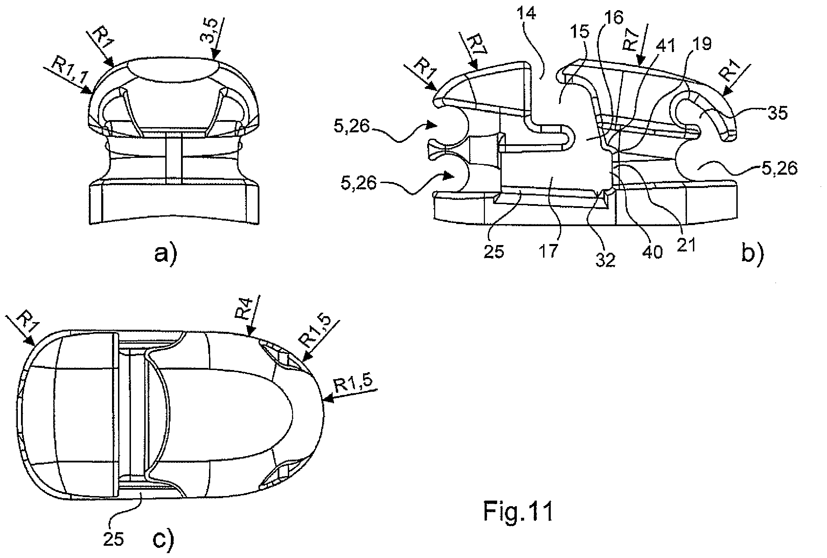

An der Schlitzwand 18a ist wie in Fig. 4.12 (einem vergrößerten Ausriss aus Fig. 4.11 bzw. Fig. 4.7) gut erkennbar ist, eine Materialverdünnung zwischen Schlitzwand 18a und dem Bracket an Materialverjüngung als Sollbruchstelle zwischen Schlitzwand 18a und dem Bracketboden 8 erkennbar. Diese Sollbruchstelle hat den besonderen Sinn, dass dann, wenn das gesamte Bracket vom Zahn entfernt werden soll, zunächst der in Figur 11 dargestellte untere Teil 33 des Brackets in Richtung des anderen Teils 34 (mit Kraft) gebogen wird und somit der untere Teil 33 vom restlichen Teil 34 des Brackets abbricht.

Dann ist es für den Behandler einfacher, entweder den gesamten Bogen aus dem vierten Schlitzabschnitt herauszuführen und/oder andererseits das gesamte Bracket vom Zahn auf dem das Bracket aufgeklebt ist, abzulösen.

Die Unterseite des Brackets ist in Fig. 4.6 und in einer vergrößerten Darstellung in Fig. 4.3 Aufsicht gezeigt. Dabei ist gut zu erkennen, dass der Bracketboden - was durchaus auch möglich wäre, aber im gezeigten Beispiel anders gehalten ist - nicht eben ausgeformt ist, sondern eine gitterartige (auch gemescht) Struktur aufweist, sodass Kleber zwischen Zahn und Bracket sich sehr gut mit dem Bracketmaterial verbinden kann.

Wenn das Klebematerial auf dem Bracketboden 8 aufgebracht wird und unter Umständen zu viel Material aufgebracht wird, so ist wie in Fig. 4.6, Fig. 4.13, Fig. 4.14 und Fig. 4.15 gut zu erkennen auf einer Seite des Bracket - dargestellten Bespiel an der "stumpfen Seite" des ovalförmigen Grundschnitts - ein Klebeaustrittskanal ausgebildet. Dashatden Vorteil, dass das meiste des überschüssigen Klebematerials bevorzugt nur dort austritt, wenn das Bracket auf den Zahn gedrückt wird und das überschüssige Klebematerial kann dann dort entsprechend leicht von der zu behandelnden Person entfernt werden und der gesamte Austrittskanal wird durch das austretende Klebematerial auch gleichzeitig verschlossen und abgedichtet und bildet nach seiner Aushärtung somit quasi dort den Abschlussrand des Brackets.

In Fig. 4.14 ist auch im Querschnitt nur die raue, gitterartige Oberflächenstruktur 29 der Bracketunterseite zu erkennen, die, wie erwähnt, dazu dient, diese Seite des Brackets mit einer größeren Oberfläche zu versehen, damit der Kleber dort mehr Möglichkeit hat, einen sicheren Halt am Bracket zu finden.

Wie in Fig. 4.4, aber auch in Fig. 4.13, 4.14 und 4.15 zu erkennen, ist der gesamte Querschnitt, das heißt in der mesial nach distal in Richtung des Brackets der gesamte Bracketboden nicht plan ausgeführt, sondern mit einer leichten Wölbung 30 versehen. Diese Wölbung ist der natürlichen Zahnkrümmung nachgebildet und bei einem erfindungsgemäßen Bracket z können sich auch die Brackets des Sets durch unterschiedliche Wölbungsradien unterscheiden, sodass der behandelnde Arzt immer auch die Möglichkeit hat, dass Bracket hinsichtlich der Wölbung und den zu applizierenden Zahn optimiert auszuwählen.

Wie in den Fig. 4.1, 4.2, wie auch Fig. 4.5, 4.7, 4.11 sowie Fig. 4.15 zu erkennen, weist das erfindungsgemäße Bracket auch eine Einschnürung 5 auf, welche jedoch nicht, wie in Figur 1b dargestellt, parallel zum Bracketboden verläuft sondern in einem leichten Winkel hierzu. Diese Einstellung dient einerseits dazu dort einen Ring aus z.B. elastischen Material (z.B. Gummi) einzulegen, was zur Folge hat, dass der sich in dem vierten Schlitzabschnitt befindliche Bogen dann nicht mehr aus dem vierten Schlitzabschnitt herausbewegt werden kann, ohne das der Ring entfernt wird.

Anderseits kann aber auch der Bogen selbst in die, dem Bracket umlaufende Einstellung 5, 26 hineingelegt werden, um somit eine tordierende (torquierende) Kraft auf das Zahnzentrum zu legen, beispielsweise um den Zahn in seine gewünschte vestibuläre/orale/vertikale Richtung zu bewegen oder zu halten.

Wie besonders gut in den Fig. 4.5, 4.7 und 4.9 zu erkennen ist, weist das Bracket auch einen runtergezogenen Bracketrand 27 auf, der eine Aussparung 28 umschließt. Das Herunterziehen des Bracketrandes hat zur Folge, dass die schildkrötenartige Struktur auch für die gesamte Bracketoberfläche verbessert wird und apikal/lingual keine scharfen Ränder ausgebildet sind und anderseits kann auch Bogenmaterial in der Aussparung 28 zur Anlage kommen, um somit den Zahn in Richtung Mundinnenraum oder in Richtung Lippen zu kippen bzw. eine entsprechende Kraft auf den Zahn auszuüben.

Fig. 4.10 zeigt einen Querschnitt des erfindungsgemäßen Bracket entlang der Schnittlinie G. Diese Schnittlinie läuft quasi zentral durch die mittlere Ebene der Einschnürungsaussparung des Bracket. Wie in der Fig. 4.10 gut zu erkennen ist, ist der Querschnitt des oberen Bracktabschnitts dort im Wesentlichen rechteckig oder quadratisch, während der Querschnitt des unteren Bracketabschnitts 33 im Wesentlichen halbkreisförmig ist.

Die weiteren Fig. 4b, 4c, 4d, 4e, 4f und 4g zeigen das in Figur a in den verschiedenen Ansichten dargestellte Bracket in vergrößerter Darstellung und zur weiteren verbesserten Verständlichkeit des gesamten dreidimensionalen Bracketkörpers. Dabei ist besonders gut zu erkennen, dass der Bracketkörper hinsichtlich seiner Längsrichtung in etwa einem Kreisumfang eine Kreislinie 35 (in der Fig. 4.7 mit R5.5 bemaßt) folgt, während die Bracketoberfläche in der Querrichtung q ebenfalls einen Umfang der Kreislinie 36 nachgeführt wird und welche in Fig. 4.4 beispielshaft mit R3.5 bemaßt ist.

Die "Rundheit" der Bracketoberfläche ist besonders gut auch in den Fig. 4c, 4d, 4b und 4g zu erkennen.

Fig. 6a, 6b, 6c, 6d, 6e und 6f zeigen eine alternative Ausführung zum Bracket, wie es auch in Fig. 1b dargestellt ist. Es handelt sich um eine Bracketausführung bei der ein Durchbruch (Tunnel) 6 ausgebildet ist, durch den ein Bogendraht gezogen, mit welchem auf besonderer Weise ein Fixpunkt für die kieferorthopädische Behandlung gefunden wird.

Solches Bracket wird insbesondere an den Zähnen angebracht, die als Fixpunkt dienen, sei es zum Beispiel einen Backenzahn oder auch zum Beispiel einen Eckzahn.

Wie in den Fig. 6 gut zu erkennen, weist auch dieses Bracket eine in einem bestimmten Winkel zum Bracketboden verlaufende Einschnürung 5 auf und ebenfalls einen heruntergezogenen Bracketrand 27, sowie eine damit eingeschlossene Aussparung 28.

Fig. 7a zeigt in eine nochmals vergrößerte Darstellung die Unterseite eines erfindungsgemäßen Bracket mit einer dreidimensionalen gemeschten Struktur, wie auch dem Klebeaustrittskanal 31.

Wie zu erkennen, besteht die gemeschte Struktur im Wesentlichen aus rechtwinklig oder im 45°-Winkel zueinander ausgebildeten geradlinienförmigen Erhebungen und/oder Vertiefungen die somit eine sehr raue und vergrößerte Oberfläche bilden und somit eine maximale Angriffsfläche für den verwendeten Kleber bilden.

Statt der gemeschten Basis nach Figur 7a ist alternativ erfindungsgemäß auch eine Ausführung, wie sie in Figur 7b dargestellt, vorteilhaft. Fig. 7b zeigt eine Ausriss aus der Basis mit einer "Mushroom-Struktur" und bei einer solchen Ausführungsform weist die Basis eine Vielzahl, z.B. mehr als 100 von kleinen Körpern auf, die im Übergangsbereich zum Basisboden im Querschnitt zylinderförmig, oval oder dergleichen ausgebildet sind und die an ihrem freien Ende dann mit einem etwa kugelförmigen (tropfenförmigen) Körper abschlie-ßen, sodass aus der Seitenansicht in etwa der Eindruck eines kleinen "Steinpilzes" entsteht, daher der Begriff "Mushroom-Basis". Die Vielzahl kleiner Körper, die die Mushroom-Basis bilden, können gleich/symmetrisch oder ungleich/unsymmetrisch über die Basisfläche verteilt sein. In Fig. 7b ist eine ungleichmäßige/unsymmetrische Verteilung gezeigt.

Der Vorteil der Mushroom-Basis kann einerseits produktionsbedingt vorliegen, andererseits hat eine solche Mushroom-Basis auch den Vorteil, dass sie den jeweils eingesetzten Kleber eine noch größere Oberfläche anbietet zur Anhaftung an der Basis des Brackets.

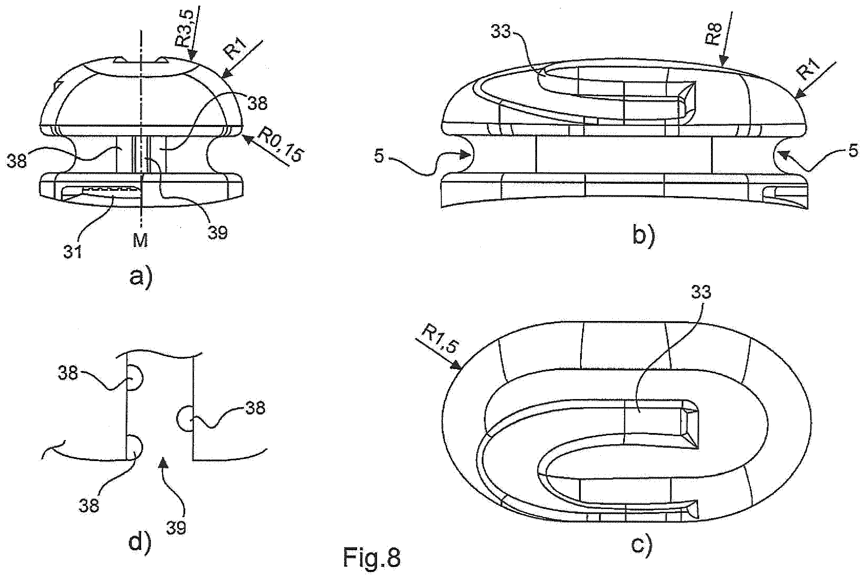

Fig. 8 zeigt drei verschiedenen Ansichten a), b) und c) eines molaren Bracket (Backenzahnbracket).

Die Form ist elliptisch (konvex) in Längsrichtung zudem schildkrötenpanzerartig gewölbt in sagittaler und apikal okklusaler Richtung, um Irritationen an der Schleimhaut (bzw. Innenlippe) oder Zunge zu verringern. Vestibulär befindet sich ein nach distal geöffneter flügelähnlicher Ausschnitt 33, der zum Einhängen von elastischen Gummiketten und/oder intermaxillären Gummizügen, Stahlligaturen, lace backs usw. dienen.

Eine rillenförmige Einschnürung 5 verläuft vestibulär ringförmig zur Bracketbasis und dient ebenfalls zum Einhängen elastischer Ketten und/oder intermaxillärer Gummizüge oder Verblockungen.

Wie in Fig. 8a erkennbar, weist das Bracket in Längsrichtung mittig eine durchgehende Öffnung (Tunnel) 39 auf. Diese durchgehende Öffnung verläuft in mesiodistaler, also sagittaler Richtung. Auf der Innenseite der Öffnung sind ebenfalls, z.B. im Querschnitt im Wesentlichen halbkreisförmig ausgebildete Stege 38 ausgebildet. Diese Stege sind vom Aufbau her so ausgebildet, wie die Stege 25 im vierten Schlitzkanal und dienen im Wesentlichen der Friktionsreduzierung, wobei die Stege 38 vorzugsweise auf beiden Seiten der Öffnung 39 ausgebildet sind und in Figur 8d erkennbar die Stege auf den gegenüberliegenden Seiten des Öffnungskanals 39 versetzt angeordnet sind (aber auch eine genüberliegende Positionierung der Stege 38 des Öffnungskanals 39 ist möglich).

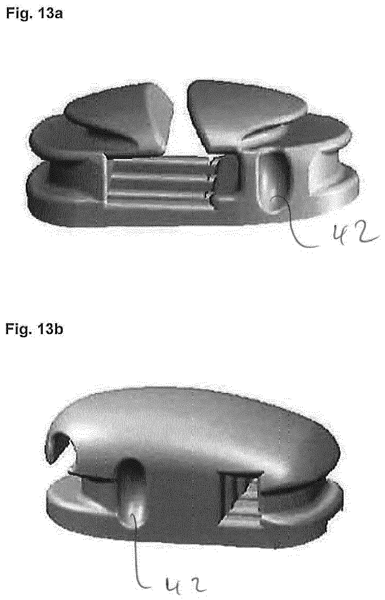

Die Bracketbasis ist wie bereits in den vorhergehenden Figuren ausgeführt (wie insbesondere Fig. 4.6, 4.13 (siehe dort "H" oder 4.15), weist mithin eine Abschrägung von 105° Grad auf (wie in Fig. 13 und 14 in vergrößerter Darstellung gezeigt) und ebenfalls den bereits beschriebenen Klebeaustrittskanal 31 für überschüssiges Material, wobei dieser Kleberaustrittskanal 31 in Fig. 8a leicht zur Mitte M versetzt ist.

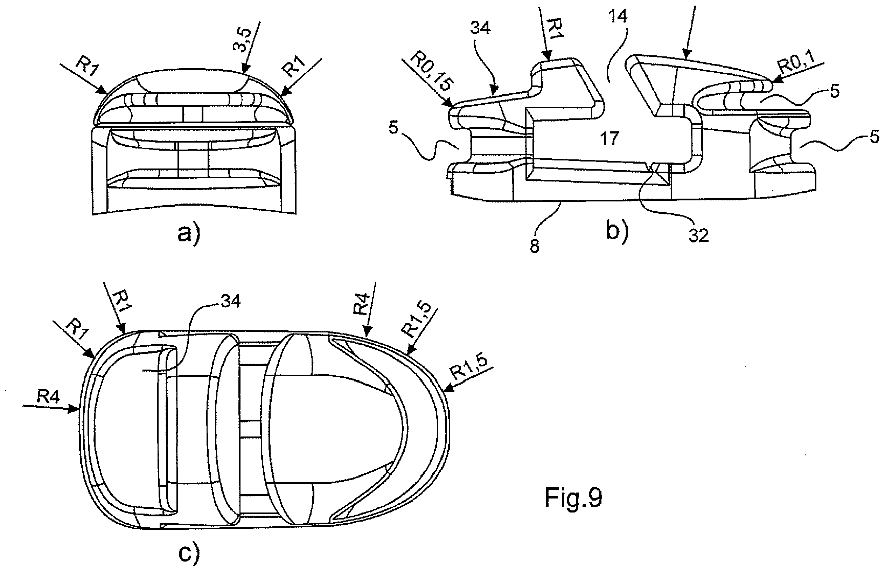

Fig. 9 zeigt drei verschiedene Ansichten a, b und c des Frontzahnbrackets für den Unterkiefer.

Das Frontzahnbracket zeigt eine flachere Bracketbasis (entsprechende Oberflächenausformung eines Frontzahns im Unterkieferbereich) entsprechend des kleinen Radius der Frontzähne in mesiodistaler Richtung.

Wiederum ist eine Aussparung 31 für überschüssiges Klebematerial vorgesehen, die gemaschte Basis verschafft mehr Halt auf Grund der Flächenvergrößerung.

Die abgeschrägte, rampenartige Ausbildung 34 des inzisalen Anteils des Brackets ist vorteilhaft, um bei zu steil stehender Oberkieferfront einen weitgehenden Kieferschluss zu ermöglichen und dabei die steil oder retrudiert stehende Oberkieferfront zeitgleich mit Kieferschluss sukzessive zu protrudieren.

Die zur "Grube" 17 (vierten Schlitzabschnitt) hin abfallende Abschrägung hat die Funktion des ersten Schlitzabschnitts 14, dient im anfänglichen Teil des Schlitzabschnitts dazu, den Bogen bei "Bogenbewegung" in dem Teil des Passsitzes im Bracket zu halten, ebenso wie in bestimmten Fällen im vierten Schlitzabschnitt 17 selbst.

Im dargestellten Beispiel in Fig. 9b läuft der erste Schlitz 14 in einem schrägwinkligen Winkel auf den vierten Schlitzabschnitt 17 (Grube) zu, es ist aber auch ein rechtwinkliger Zulauf möglich (wenn auch nicht dargestellt).

Die umlaufenden Rillen 5, die auch als die Einschnürung oder Einkerbung ausgebildet sind, sind für die Aufnahme von intermaxillären Gummizügen, Verblockungen, Alastics, elastischen Ketten, etc. vorgesehen.

Die dargestellte Kerbe 32 ist eine Sollbruchstelle.

Die Form der apikalen Hälfte istwiederum schildkrötenpanzerartig (nach außen gewölbt mit sanften Übergängen in den Kantenbereichen) ausgebildet - dies kann man auch als konvexe Ausbildung bezeichnen - um Irritationen auf der Schleimhaut zu verringern.

Auf beiden Seiten des Passsitzes angebrachten Wellen/Steg 25 dienen der Friktionsreduzierung.

Die Grube apikal zum Passsitz (im Unterkiefer) und okklusal (im Oberkiefer) dient zur Aufnahme des Bogens, sofern dieser sich aus Zahnstellungsgründen innerhalb des Bracketsystems nicht im Schlitzkanal 17 befinden kann.

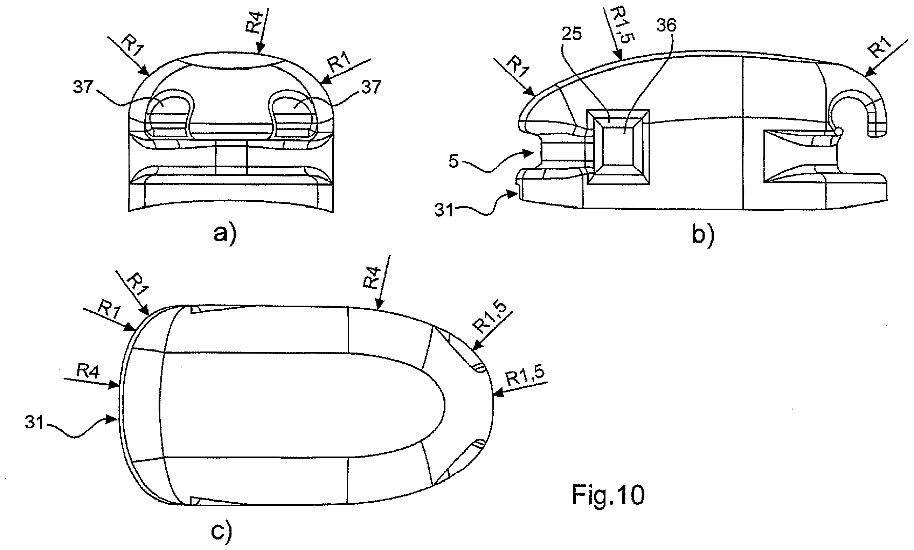

Fig. 10 zeigt wiederum in drei Ansichten a (Querschnitt), b (Längsschnitt) und c (Obenaufsicht) ein Eckzahnbracket.

Die umlaufende Rille 5, sowie die apikale Bucht 35 sind für intermaxilläre Gummizüge, Verblockungen, Alastics, elastische Ketten, etc. ausgebildet.

Die Wellen/Stege 25 im Tunnel 36 dienen der Friktionsreduzierung.

Die vestibuläre Oberfläche ist wiederum schildkrötenpanzerartig, also im Wesentlichen konvex ausgebildet, um Irritationen auf der Schleimhaut zu verringern.

Die Bracketbasis ist, wie in den bereits gezeigten Darstellungen ausgebildet, mit einem Klebeaustrittskanal 31 für überschüssiges Material.

Fig. 11 zeigt wiederum drei Ansichten a), b) und c) eines Prämolarenbracket.

Die Schlitzführung weist einen ersten Schlitzabschnitt 14, einen zweiten Schlitzabschnitt 15, einen dritten Schlitzabschnitt 16 und einen vierten Schlitzabschnitt 17 auf (bereits zu Fig. 4 beschrieben). Der vierte Schlitzabschnitt 17 bildet dabei den Passsitz für den eingefügten Bogendraht (nicht dargestellt) und somit erweist das wie bereits beschriebene und auch in Fig. 11 gezeigte erfindungsgemäße Bracket keine mechanischen bzw. beweglichen Teile auf.

Die umlaufenden Rillen/Einschnürungen 5, 26 sind für die Aufnahme *von* intermaxillären Gummizügen, Verblockungen, Alastics, elastischen Ketten, etc. vorgesehen.

Die Kerbe 32 dient als Sollbruchstelle für den Fall, dass das Bracket vom Zahn abgenommen werden soll. Wenn dann die beiden in Fig. 11b links und rechts von der Sollbruchstelle 32 ausgebildeten Teile aufeinander zubewegt werden, bricht das Bracket unterhalb der Kerbe 32 und somit kann dann das Bracket leicht vom Zahn gelöst werden, weil die Kontaktklebefläche auf 2 Teile aufgeteilt wird.

Die im apikalen Teil befindliche Bucht 35 zum Einhängen von Ketten, Gummizügen oder zur Bogendurchführung.

Die Stege (kann man auch als Wellen bezeichnen) 25 im vierten Schlitzabschnitt (Passsitz) dienen zur Friktionsreduzierung.

Wiederum ist auch in Fig. 11 gut erkennen, dass die vestibuläre Oberfläche des erfindungsgemäßen Bracket schildkrötenpanzerartig, also sowohl in Längs- als auch in Querrichtung im Wesentlichen konvex ausgebildet ist, um Irritationen auf der Schleimhaut zu verringern oder gänzlich zu verhindern.

Wie bereits unter anderem auch in Fig. 3b aber auch in Fig. 4.7, 4.9 und anderen dargestellt, weist der vierte Schlitzabschnitteingangsbereich eine über dem dritten Schlitzabschnitt leicht versetzte untere Basis 19 auf, die eine Bodenebene 21 bildet, nachfolgend auch als Grube 40 bezeichnet. Diese Grube 40 ist in Fig. 11b gut erkennbar dargestellt. Diese Grube ist apikal zum Passsitz (im Unterkiefer) und okklusal (im Oberkiefer) ausgerichtet, dass bedeutet, dass die Grube dann, wenn das Bracket auf dem Zahn aufgesetzt ist, bevorzugt in Richtung Zahnfleisch ausgerichtet ist. Diese Grube 40 dient zur Aufnahme des Bogens, insofern sich dieser aus Zahnstellungsgründen innerhalb des Bracketsystems nicht im verengtem Bereich des vierten Schlitzabschnittes befinden kann und mit der Ausbildung der Grube wird der Bogen immer noch sicher vom Bracket und somit dem vierten Schlizabschnitt 17 gehalten, jedenfalls soll durch die Grube 40 verhindert werden, dass der Bogen sich unabsichtlich aus dem vierten Schlitzabschnitt 17 in den dritten Schlitzabschnitt 16 bewegt, woran die Wand und die Kante 41 der Grube den Bogen hindert.

Fig. 12 weist in drei Ansichten a), b) und c) Darstellungen eines Frontzahnbrackets für den Oberkiefer auf.

Auch dort ist wieder gut zu erkennen, dass die vestibuläre Oberfläche schildkrötenpanzerartig, also in Längs- und Querrichtung im Wesentlichen konvex ausbildet ist, um Irritationen auf der Schleimhaut zu verringern.

Die in den Figuren dargestellten Radien auf der Oberseite des Brackets oder an der Seite stellen ein Beispiel dar und können auch durchaus als "Best-Mode-Ausführung" dienen.

Gleichwohl ist im Wesentlichen darauf hinzuweisen, dass Abweichungen von den Radien ohne weiteres möglich sind, ohne dabei den Schutzbereich der Erfindung zu verlassen.

Die Radienangaben sind daher nur beispielhaft, insbesondere, um die beschriebene Schildkrötenpanzerstruktur der vestibulären Oberfläche des Brackets und deren sanfte Rundungen zu beschreiben. Wie ausgeführt, dient dies dazu, durch Vermeidung von scharfen Kanten der vestibulären Oberfläche des erfindungsgemäßen Brackets, Irritationen an der Zunge oder auf der Innenseite der Lippe und damit auf der Schleimhaut zu verringern oder ganz zu vermeiden.

Die Erfindung umfasst nicht nur ein einzelnes Bracket, sondern auch ein Set von Brackets, also z.B. ein Set bestehend aus molaren Bracket, prämolaren Bracket, Frontzahn- bracketfür Unter- und Oberkiefer und Eckzahnbracket.

Die Erfindung umfasst darüber hinaus nicht nur ein einzelnes solches Set, sondern auch ein Set (Satz) von Brackets mit unterschiedlichen Bracketgrößen, damit das einzelne Bracket auch auf die Zahngröße entsprechend angepasst ist. Es versteht sich von selbst, dass beispielsweise ein großes Bracket auf einen kleinen Zahn nicht passt, sondern die jeweilige Bracketgröße auch an die Zahngröße anzupassen ist.

Fig. 13a und 13b zeigen zwei weitere Ansichten eines Bereichs einer beschriebenen Bracketform, allerdings sind bei den dargestellten Brackets Kerben 42 an jeweils den gegenüberliegenden Seiten des jeweiligen Bracket angeordnet. Im dargestellten Beispiel nach der Fig. 13a und 13b handelt es sich um die prämolaren Brackets. Die Kerben 42 (die man auch als Buchten bezeichnen kann) dienen zum Einhängen von intermaxillären Gummizügen und/oder Gummiketten, z.B. bei sagittaler Bewegung des Bracket auf Grund von Lücken im Zahnbogen. Der Kraftvektor rückt damit näher an das Widerstandszentrum im Knochen, wodurch der Zahn weniger kippt.

In Fig. 13b ist der in bereits in einigen anderen Darstellungen gezeigte Kanal 12 oder Durchbruch 6 zu erkennen. Dieser Kanal - der auch als Molarenröhrchen zu bezeichnen ist - sollte eine Breite von mindestens Durchbruch 0,2 mm aufweisen und, wie bereits beschrieben, in seinem Inneren gegenüberliegend versetzte Vorsprünge oder Stege 25 aufweisen, um einen Bogendraht, Faden oder dergleichen der durch den Kanal gezogen wird, bestmöglich zu fixieren.

### Bezugszeichenliste

- 1: Bracket
- 2: Einkerbungen
- 3: Wölbung
- 4: Zenit
- 5: Einschnürung
- 6: Durchbruch
- 7: Öffnung
- 8: Bracketboden (Bracketbasis)
- 9: Kerben/Nuten
- 12: Kanal
- 13: Schlitz
- 14: erster Schlitzabschnitt
- 15: zweiter Schlitzabschnitt
- 16: dritter Schlitzabschnitt
- 17: vierter Schlitzabschnitt
- 18: Schlitzwand
- 18a/18b: gegenüberliegende Wände des Schlitzes 18
- 19: untere Basis des Schlitzabschnitts 17
- 20: Ende des Schlitzabschnitts 17
- 21: Bodenebene
- 22: Wandungsebene
- 23: aufgeweitete Öffnung des ersten Schlitzabschnitts 14
- 24: Bracketkörper
- 25: Steg im vierten Schlitzkanal
- 26: umlaufende Einschnürung/Einkerbung
- 27: runtergezogener Bracketrand
- 28: Aussparung zur Anlage für einen Bogen oberhalb der Einschnürung 26
- 29: Meschstruktur der Bracketunterseite (die dem Zahn zugewandt ist)
- 30: gewölbte Unterseite (der natürlichen Zahnkrümmung angenähert)
- 31: Kleberaustrittskanal
- 32: Sollbruchstelle
- 33: flügelähnlicher Ausschnitt
- 34: abgeschrägte Rampe
- 35: apikale Bucht
- 36: Tunnel
- 37: Kerben
- 38: Stege
- 39: Öffnung
- 40: Grube
- 41: Kante
- 42: Kerben

## Patentansprüche

1. Bracket zur Korrektur der Zahnstellung mit einer an einem Zahn befestigbaren Bracketbasis (8) eines Bracketkörpers (24), welcher einen von mesial nach distal verlaufenden Schlitz (13) sowie einen vierten Schlitzabschnitt (17) aufweist, der sich in einem vorbestimmten Bereich (18a, 18b) um ein vorbestimmtes Maß (α) verengt, um einen Passsitz für einen eingeführten Bogendraht zu bilden, wobei der vierte Schlitzabschnitt in Längsrichtung im Wesentlichen parallel zur Bracketbasis (8) laufend ausgebildet ist,
wobei der mesial nach distal verlaufende Schlitz (13) einen ersten Schlitzabschnitt (14) zur Einführung des Bogendrahts aufweist, wobei sich an dem ersten Schlitzabschnitt (14) einer im Wesentlichen senkrecht dazu verlaufender zweiter Schlitzabschnitt (15) anschließt, der sich in Richtung Bracketbasis (8) einem dritten Schlitzabschnitt (16) anschließt, wobei der dritte Schlitzabschnitt (16) im Wesentlichen parallel zum ersten Schlitzabschnitt (14) liegt und sich dem dritten Schlitzabschnitt der vierter Schlitzabschnitt (17) anschließt, welcher im Wesentlichen parallel zum zweiten Schlitzabschnitt (15) und somit senkrecht zum dritten Schlitzabschnitt (16) ausgerichtet ist.

2. Bracket nach Anspruch 1, **dadurch gekennzeichnet, dass**
- der vierte Schlitzabschnitt (17) länger ist als der erste und/oder zweite und/oder dritte Schlitzabschnitt (14, 15, 16), und/oder
- der vierte Schlitzabschnitt (17) an seiner engsten Stelle eine Schlitzbreite aufweist, die geringer ist als der Durchmesser des Bogendrahtes und dass der erste Schlitzabschnitt (14) vorzugsweise eine Aufweitung (23) zur Einführung des Bogendrahtes aufweist.

3. Bracket nach einem der vorherigen Ansprüche **dadurch gekennzeichnet, dass**
- der erste und der dritte Schlitzabschnitt (14, 16) im Wesentlichen in Richtung zur Bracketbasis (8) verlaufen während der zweite und der vierte Schlitzabschnitt (15, 17) im Wesentlichen zervikal (und somit in etwa parallel zur Bracketbasis 8) verlaufen, und/oder
- dass das Bracket vorzugsweise eine umlaufende Einschnürung/Einkerbung (5) aufweist.

4. Bracket nach einem der vorherigen Ansprüche, **dadurch gekennzeichnet, dass**
- die Bracketbasis (8) schmaler ist als die zervikale Ausdehnung des Brackets (1) und dass an der Bracketbasis (8) oberhalb und/oder unterhalb eine mesial nach distal verlaufende Aufsparung (9a, 9b) am Bracketkörper vorgesehen ist.

5. Bracket nach einem der vorherigen Ansprüche, **dadurch gekennzeichnet, dass**
- der vierte Schlitzabschnitt (17) eine Basis (19) aufweist, welcher unterhalb der Basis (22) des dritten Schlitzabschnitts (16) liegt, und/oder dass
- der vierte Schlitzabschnitt (17) eine der Schlitzabschnittbasis (19) gegenüberliegendes Ende (20) aufweist, welches oberhalb der Oberseite des ersten Schlitzabschnitts (14) liegt.

6. Bracket nach einem der vorgehenden Ansprüche, **dadurch gekennzeichnet, dass**
- das Bracket einen Boden aufweist, der von einem umlaufenden Rand (37) umgeben ist, welcher an einer bestimmten Stelle des Randes einen Durchbruch als Klebeaustrittskanal (31) aufweist und/oder
- dass das Bracket aus einem ersten Teil (33) und einem zweiten Teil (34) besteht, die zusammen hergestellt werden und zwischen denen eine Sollbruchstelle (32) ausgebildet ist.

7. Bracket nach einem der vorhergehenden Ansprüche, **dadurch gekennzeichnet, dass** die Bracketoberseite in Längsrichtung (l) und/oder Querrichtung (q) im Querschnitt im Wesentlichen auf einer Kreislinie (35, 36) liegt.

8. Bracket nach einem der vorhergehenden Ansprüche, **dadurch gekennzeichnet, dass**
- der Bracketboden im Wesentlichen in Querrichtung eine gewölbte Unterseite (30) aufweist, welche der natürlichen Zahnkrümmung angenähert ist und/oder
- dass das Bracket eine Einschnürung aufweist, welche entweder in etwa parallel zum Bracketboden verläuft oder in einem Winkel hierzu, zum Beispiel 5-10°, vorzugsweise 7° liegt.

9. Bracket nach einem der vorherigen Ansprüche zur Korrektur der Zahnstellung mit einer an einem Zahn befestigbaren Bracketbasis (8) an einem Bracketkörper (24) mit einem von mesial nach distal verlaufenden Schlitz (13), welcher durch einen vierten Schlitzabschnitt gebildet wird, der zwei gegenüberliegende Schlitzwände (18) aufweist, wobei die gegenüberliegenden Schlitzwände (18a, 18b) nicht parallel liegen, sondern einen Winkel von 2 - 8°, vorzugsweise 5° einschließen.

10. Bracket nach einem der vorhergehenden Ansprüche, **dadurch gekennzeichnet, dass** wenigstens eine der beiden Schlitzwände (18a, 18b) des vierten Schlitzabschnitts (17) wenigstens ein in Längsrichtung des vierten Schlitzabschnitts (17) verlaufender Steg (25), bevorzugt mehrere Stege (25) aufweist, auf denen der Bogendraht zur Anlage kommen kann.

11. Bracket nach einem der vorhergehenden Ansprüche, **dadurch gekennzeichnet, dass** die vestibuläre Oberfläche des Brackets schildkrötenpanzerartig, scharfkantenfrei und somit bevorzugt in Längsrichtung als auch in Querrichtung eine im Wesentlichen konvex verlaufende Oberfläche aufweist, um Irritationen auf der Schleimhaut zu verringern, und dass das Bracket vorzugsweise aus einem einzigen Teil besteht und somit keine mechanisch beweglichen Teile aufweist.

12. Bracket nach Anspruch 11, **dadurch gekennzeichnet, dass** das Bracket an seiner Oberseite keine scharfen Kanten aufweist, sondern Rundungen, die je nach Lage mit einem Radius im Bereich von r 0,1 bis r 10, vorzugsweise etwa im Bereich von r 1 bis r 8 ausgebildet sind.

## Claims

1. A bracket for correcting the position of a tooth, comprising a bracket base (8) of a bracket body (24), which bracket base (8) can be fastened to a tooth, and which bracket body (24) has a slot (13), extending in the mesiodistal direction, and also a fourth slot portion (17) that narrows by a predetermined amount (α) in a predetermined region (18a, 18b), so as to form a snug fit for an inserted archwire, wherein the fourth slot portion is designed running in the longitudinal direction substantially parallel to the bracket base (8),
wherein the slot (13) extending in the mesiodistal direction has a first slot portion (14) for insertion of the archwire, wherein the first slot portion (14) is adjoined by a second slot portion (15) which extends substantially perpendicular thereto and which, in the direction of the bracket base (8), adjoins a third slot portion (16), wherein the third slot portion (16) lies substantially parallel to the first slot portion (14), and the third slot portion is adjoined by the fourth slot portion (17), which is oriented substantially parallel to the second slot portion (15) and thus perpendicular to the third slot portion (16).

2. The bracket as claimed in claim 1, **characterized in that**
- the fourth slot portion (17) is longer than the first and/or second and/or third slot portion (14, 15, 16) and/or
- the fourth slot portion (17), at its narrowest point, has a slot width that is smaller than the diameter of the archwire, and **in that** the first slot portion (14) preferably has a widening (23) for insertion of the archwire.

3. The bracket as claimed in one of the preceding claims, **characterized in that**
- the first and the third slot portions (14, 16) extend substantially in a direction to the bracket base (8), while the second and the fourth slot portions (15, 17) extend substantially cervically (hence approximately parallel to the bracket base 8) and/or
- the bracket preferably has a circumferential constriction/notch (5).

4. The bracket as claimed in one of the preceding claims, **characterized in that**
- the bracket base (8) is narrower than the cervical extent of the bracket (1), and **in that** a recess (9a, 9b) extending in the mesiodistal direction is provided above and/or below on the bracket body at the bracket base (8).

5. The bracket as claimed in one of the preceding claims, **characterized in that**
- the fourth slot portion (17) has a base (19) which lies below the base (22) of the third slot portion (16) and/or
- that the fourth slot portion (17) has an end (20) which lies opposite the slot portion base (19) and which lies above the upper side of the first slot portion (14).

6. The bracket as claimed in one of the preceding claims, **characterized in that**
- the bracket has a bottom surrounded by a circumferential edge (37) which, at a certain location of the edge, has an aperture serving as an outlet channel (31) for adhesive and/or
- the bracket is composed of a first part (33) and a second part (34), which are produced together and between which a predetermined breaking point (32) is formed.

7. The bracket as claimed in one of the preceding claims, **characterized in that** the bracket upper side in the longitudinal direction (l) and/or transverse direction (q) in cross section lies substantially on a circular line (35, 36).

8. The bracket as claimed in one of the preceding claims, **characterized in that**
- the bracket bottom substantially in the transverse direction has a curved underside (30), which approximates to the natural tooth curvature and/or
- the bracket has a constriction which either extends approximately parallel to the bracket bottom or lies at an angle thereto, for example 5-10°, preferably 7°.

9. A bracket according to one of the preceding claims for correcting the position of a tooth, comprising a bracket base (8) on a bracket body (24), which bracket base (8) can be fastened to a tooth, and which bracket body (24) has a slot (13) extending in the mesiodistal direction and formed by a fourth slot portion that has two opposite slot walls (18), wherein the opposite slot walls (18a, 18b) do not lie parallel and instead enclose an angle of 2° to 8°, preferably 5°.

10. The bracket as claimed in one of the preceding claims, **characterized in that** at least one of the two slot walls (18a, 18b) of the fourth slot portion (17) has at least one web (25) extending in the longitudinal direction of the fourth slot portion (17), preferably a plurality of webs (25), on which the archwire can come to rest.

11. A bracket as claimed in one of the preceding claims, **characterized in that** the vestibular surface of the bracket is like a tortoise shell, free of sharp edges and thus preferably has a substantially convex surface in the longitudinal direction and also in the transverse direction, in order to reduce irritation of the mucous membrane, and **in that** the bracket is preferably composed of a single part and thus has no mechanically movable parts.

12. The bracket as claimed in claim 11, **characterized in that** the bracket, at its upper side, has no sharp edges, but instead rounded curves which, depending on the position, are configured with a radius in the range of r 0.1 to r 10, preferably approximately in the range of r 1 to r 8.

## Revendications

1. Bague orthodontique destinée à corriger la position d'une dent avec une base de bague orthodontique (8), pouvant être fixée sur une dent, d'un corps de bague orthodontique (24), lequel présente une entaille (13) s'étendant depuis le côté mésial vers le côté distal ainsi qu'une quatrième section d'entaille (17), qui se rétrécit d'une mesure (α) prédéfinie dans une zone (18a, 18b) prédéfinie pour former un siège ajusté pour un fil métallique en forme d'arc introduit, dans laquelle la quatrième section d'entaille est réalisée de manière à s'étendre dans la direction longitudinale de manière sensiblement parallèle à la base de bague orthodontique (8),
dans laquelle l'entaille (13) s'étendant depuis le côté mésial vers le côté distal présente une première section d'entaille (14) destinée à introduire le fil métallique en arc, dans laquelle se raccorde à la première section d'entaille (14) une deuxième section d'entaille (15) s'étendant de manière sensiblement perpendiculaire à celle-ci, à laquelle se raccorde dans la direction de la base de bague orthodontique (8) une troisième section d'entaille (16), dans laquelle la troisième section d'entaille (16) se situe de manière sensiblement parallèle à la première section d'entaille (14) et se raccorde, à la troisième section d'entaille, la quatrième section d'entaille (17), laquelle est orientée de manière sensiblement parallèle à la deuxième section d'entaille (15) et ainsi de manière perpendiculaire à la troisième section d'entaille (16).

2. Bague orthodontique selon la revendication 1, **caractérisée en ce que**
- la quatrième section d'entaille (17) est plus longue que la première et/ou la deuxième et/ou la troisième section d'entaille (14, 15, 16), et/ou
- la quatrième section d'entaille (17) présente, sur son emplacement le plus étroit, une largeur d'entaille qui est inférieure au diamètre du fil métallique en arc, et que la première section d'entaille (14) présente de préférence un élargissement (23) destiné à introduire le fil métallique en arc.

3. Bague orthodontique selon l'une quelconque des revendications précédentes, **caractérisée en ce que**
- la première et la troisième section d'entaille (14, 16) s'étendent sensiblement en direction de la base de bague orthodontique (8), tandis que la deuxième et la quatrième section d'entaille (15, 17) s'étendent de manière sensiblement cervicale (et ainsi à peu près de manière parallèle à la base de bague orthodontique (8)), et/ou
- que la bague orthodontique présente de préférence un resserrement/une encoche (5) périphérique.

4. Bague orthodontique selon l'une quelconque des revendications précédentes, **caractérisée en ce que**
- la base de bague orthodontique (8) est plus étroite que l'extension cervicale de la bague orthodontique (1) et qu'un évidement (9a, 9b) s'étendant du côté mésial vers le côté distal est prévu sur le corps de bague orthodontique sur la base de bague orthodontique (8) au-dessus et/ou en dessous.

5. Bague orthodontique selon l'une quelconque des revendications précédentes, **caractérisée en ce que**
- la quatrième section d'entaille (17) présente une base (19), laquelle se situe sous la base (22) de la troisième section d'entaille (16), et/ou que
- la quatrième section d'entaille (17) présente une extrémité (20) faisant face à la base de section d'entaille (19), laquelle se situe au-dessus du côté supérieur de la première section d'entaille (14).

6. Bague orthodontique selon l'une quelconque des revendications précédentes, **caractérisée en ce que**
- la bague orthodontique présente un fond, qui est entouré par un bord périphérique (37), lequel présente, sur un emplacement défini du bord, un ajour en tant que canal de sortie de colle (31), et/ou
- que la bague orthodontique est constituée d'une première partie (33) et d'une deuxième partie (34), qui sont fabriquées conjointement et entre lesquelles un emplacement de rupture théorique (32) est réalisé.

7. Bague orthodontique selon l'une quelconque des revendications précédentes, **caractérisée en ce que** le côté supérieur de bague orthodontique se situe dans la section transversale sensiblement sur une ligne circulaire (35, 36) dans la direction longitudinale (I) et/ou la direction transversale (q).

8. Bague orthodontique selon l'une quelconque des revendications précédentes, **caractérisée en ce que**
- le fond de bague orthodontique présente sensiblement, dans la direction transversale, un côté inférieur (30) bombé, lequel se rapproche de l'incurvation de dent naturelle, et/ou
- que la bague orthodontique présente un resserrement, lequel s'étend soit à peu près de manière parallèle au fond de bague orthodontique soit à un angle par rapport à celui-ci, par exemple de 5 - 10°, de préférence de 7°.

9. Bague orthodontique selon l'une quelconque des revendications précédentes destinée à corriger la position d'une dent avec une base de bague orthodontique (8) pouvant être fixée sur une dent sur un corps de bague orthodontique (24) avec une entaille (13) s'étendant du côté mésial vers le côté distal, laquelle est formée par une quatrième section d'entaille, qui présente deux parois d'entaille (18) se faisant face, dans laquelle les parois d'entaille (18a, 18b) se faisant face ne sont pas situées de manière parallèle mais forment un angle de 2 - 8°, de préférence de 5°.

10. Bague orthodontique selon l'une quelconque des revendications précédentes, **caractérisée en ce qu'**au moins une des deux parois d'entaille (18a, 18b) de la quatrième section d'entaille (17) présente au moins une nervure (25) s'étendant dans la direction longitudinale de la quatrième section d'entaille (17), de manière préférée plusieurs nervures (25), sur lesquelles le fil métallique en arc peut venir en appui.

11. Bague orthodontique selon l'une quelconque des revendications précédentes, **caractérisée en ce que** la surface vestibulaire de la bague orthodontique est de type carapace de tortue, sans arêtes vives et ainsi présente de manière préférée dans la direction longitudinale et dans la direction transversale également une surface s'étendant de manière sensiblement convexe pour réduire des irritations sur la muqueuse, et que la bague orthodontique est constituée de préférence d'une unique partie et ne présente ainsi aucune partie mobile mécaniquement.

12. Bague orthodontique selon la revendication 11, **caractérisée en ce que** la bague orthodontique ne présente sur son côté supérieur aucune arête vive, mais des zones arrondies, qui sont réalisées selon la position avec un rayon dans la plage de r 0,1 à r 10, de préférence environ dans la plage de r 1 à r 8.
